# EUROPEAN PATENT APPLICATION

(11) **EP 1 295 658 A1**
(43) Date of publication of application: **26.03.2003**
(21) Application number: 01941247.7
(22) Date of filing: 25.06.2001
(51) Int. Cl.: B22F 9/08, H01F 41/02, C01B 23/00, B01J 20/02

(54) **METHOD AND APPARATUS FOR PRODUCING MAGNETIC RARE EARTH ALLOY POWDER, METHOD FOR PRODUCING BONDED MAGNET, METHOD FOR PRODUCING RARE EARTH SINTERING MAGNET, AND METHOD AND APPARATUS FOR IMPROVING PURITY OF INERT GAS**

(30) Priority: 26.06.2000 JP 2000191765; 26.06.2000 JP 2000191766; 11.07.2000 JP 2000210359; 11.07.2000 JP 2000210358; 28.07.2000 JP 2000229707; 28.07.2000 JP 2000229703; 28.07.2000 JP 2000229687; 05.10.2000 JP 2000306581
(71) Applicant: Kabushiki Kaisha Bridgestone, Chuo-ku, Tokyo 104-8340 (JP)
(72) Inventor: KIKUCHI, Masami, Kabushiki Kaisha Bridgestone, Kuroiso-shi, Tochigi 329-3146 (JP)
(74) Representative: Whalley, Kevin
(86) International application number: JP0105448
(87) International publication number: WO02000379

(57) **Abstract**

Rare earth magnetic alloy fine powders are manufactured by placing a mixture of a rare earth metal and a transition metal as raw materials in a crucible, induction heating it in an Ar gas atmosphere, melting metal elements contained in the above mixture, injecting an Ar gas at a predetermined pressure from above the molten alloy to expel the above molten alloy in a downward direction from the nozzle port of the above crucible, and applying a jet stream of an inert gas to the above expelled molten alloy to collide the above expelled molten alloy with the above inert gas so as to scatter the above molten alloy and solidify it by quenching.

A rare earth bond magnet and a rare earth sintered magnet are produced using rare earth magnetic alloy fine powders obtained by the above process, which is rarely oxidized on the surface, almost spherical and uniform in diameter.

## Description

### Background of the Invention

### [Field of the Invention]

The present invention relates to a process and apparatus for producing fine powders of a rare earth magnetic alloy directly from a molten alloy, a process for producing a rare earth bond magnet from the above fine powders, a process for manufacturing a rare earth sintered magnet from the above fine powders, and a process and apparatus for increasing the purity of an inert gas used for the manufacture of the above fine powders.

### [Description of the Prior Art]

Since rare earth magnets such as SmCo and NdFeB used as permanent magnets have a great energy product (BH)_{MAX}, they are now widely used in various fields as a high power magnet, for example, a magnet for motors.

To produce alloy powders as the materials of the above rare earth magnets, the following methods have been used: (1) one in which an ingot is manufactured by a vacuum melting method for melting a rare earth metal such as Nd or Sm, a transition metal such as Fe or Co and another metal such as B in vacuum to make an alloy thereof and milled to produce fine powders of the alloy, and (2) a reduction and diffusion method in which powders of a rare earth oxide such as Nd₂O₃, powders of a transition metal such as Fe or FeB and powders of an intermetallic compound are mixed with a reducing agent such as metallic Ca, the resulting mixture is heated in an inert gas to reduce the rare earth oxide and alloy the reduced rare earth metal with the above transition metal and intermetallic compound at the same time so as to produce a Ca-reduced product which is then placed in water to be rinsed in order to remove Ca, thereby extracting powders of a rare earth magnetic alloy.

However, in the above vacuum melting method, a rare earth metal itself must be prepared separately, a large-sized device such as a vacuum melting furnace is required, and strip casting or heat treatment for homogenization is required to eliminate segregation which readily occurs in the ingot, particularly the initial segregation of iron from an iron-containing alloy. In a cool milling step using a jet mill or ball mill, as the shape of the above milled rare earth magnetic alloy powders (to be referred to as "magnetic powders" hereinafter) becomes polygonal with an acute angle, the aligning properties thereof in a magnetic field are poor, and the surface and interior of each magnetic powder are easily distorted by milling. As a result, the magnetic powders are unsatisfactory in terms of the characteristic properties of a magnet. Further, in the above milling step, the magnetic powders are readily oxidized.

Although the above reduction and diffusion method has an advantage that an inexpensive rare earth oxide can be used as a raw material, the temperature control of the above reduction reaction is difficult. When the temperature is too high, the powders are molten and become a big solid, thereby requiring a new milling step. When the temperature is too low, a normal reduction reaction does not proceed, thereby making it impossible to obtain magnetic powders having desired magnetic properties. Further, in the step of removing Ca by rinsing the above magnetic powders with water, the magnetic powders are readily oxidized.

Meanwhile, attempts are being made to manufacture magnetic powders directly from a molten alloy by melting a magnetic alloy in a crucible and injecting a high-pressure inert gas from above to expel the above molten alloy from a nozzle port formed in the bottom of the above crucible to quench it and to produce fine powders of a magnetic alloy by colliding the above expelled molten alloy with the flank of a rotating disk to quench it so as to form an amorphous thin belt having a thickness of several micrometers to several tens of micrometers, heating at a predetermined temperature to crystallize it and milling.

However, since it is difficult to control the diameter of each fine powder in the method of manufacturing magnetic powders directly from the above molten alloy, the obtained magnetic powders have a large diameter and greatly vary in diameter. When the molten alloy is a rare earth magnetic alloy, the above magnetic powders are easily oxidized. Therefore, it is difficult to put the magnetic powders to practical use.

Since it is difficult to control the diameter of each of the milled fine powders to a predetermined range and also it is necessary to remove an oxide layer on the surface of the thin belt before or after the above heat treatment step when the above magnetic alloy is a rare earth magnetic alloy in the method of manufacturing fine powders from the above amorphous thin belt, the number of production steps increases.

When an anisotropic bond magnet is to be manufactured by molding a bond magnet in a magnetic field to align the above fine powders, as most of the fine fragments obtained by milling have an acute angle, it is difficult to align the powders in a magnetic field. Further, as the oxide layer is easily formed on the surface of the rare earth magnetic alloy thin belt, the above oxide layer on the surface of the thin belt must be removed before or after the above heat treatment step, the number of production steps grows.

### Summary of the Invention

It is an object of the present invention which has been made in view of the above problems of the prior art to provide a process for producing a rare earth bond magnet and a rare earth sintered magnet having excellent magnetic properties from rare earth magnetic alloy fine powders which are uniform in diameter, rarely oxidized on the surface and directly produced from a molten rare earth magnetic alloy, and an apparatus for producing rare earth magnetic alloy fine powders.

According to a third aspect of the present invention, there is provided a process for producing rare earth magnetic alloy powders, comprising the steps of :
injecting an inert gas from above a rare earth magnetic alloy molten in a crucible to expel the molten alloy from a nozzle port formed in the bottom of the crucible; and
blowing a cooling gas which is any one of Ar gas, N₂ gas and He gas or a mixture thereof against the expelled molten alloy to produce fine powders of the alloy.

According to a fourth aspect of the present invention, there is provided a process for producing rare earth magnetic alloy powders, wherein the cooling gas is blown from two or more different directions.

According to a fifth aspect of the present invention, there is provided a process for producing rare earth magnetic alloy powders, wherein the cooling gas is blown against two or more positions in the falling direction of the molten alloy.

According to a sixth aspect of the present invention, there is provided a process for producing rare earth magnetic alloy powders, wherein the blowing directions of the cooling gas are perpendicular to each other when seen from the nozzle port side of the crucible.

According to a seventh aspect of the present invention, there is provided a process for producing rare earth magnetic alloy powders, wherein the angle formed by the blowing direction of the cooling gas and the expelling direction of the molten alloy is 20 to 45°.

According to an eighth aspect of the present invention, there is provided a process for producing rare earth magnetic alloy powders, wherein the cooling gas is mixed with Zn vapor.

According to a ninth aspect of the present invention, there is provided a process for producing rare earth magnetic alloy powders, wherein Zn vapor is supplied to the delivery passage of the molten alloy.

According to a tenth aspect of the present invention, there is provided a process for producing rare earth magnetic alloy powders, wherein the cooling gas is heated and blown.

According to an eleventh aspect of the present invention, there is provided a process for producing rare earth magnetic alloy powders, wherein a heater is mounted around the delivery passage of the molten alloy.

According to a twelfth aspect of the present invention, there is provided a process for producing rare earth magnetic alloy powders, wherein the shape of the nozzle for jetting out the cooling gas is conical.

According to a thirteenth aspect of the present invention, there is provided a process for producing rare earth magnetic alloy powders, wherein the apex angle of the conical nozzle is 20 to 40°, and the length of the nozzle is set such that the ratio of the opening diameter D of the outlet to the opening diameter d of the inlet satisfy the relationship 20 < (D/d) < 60.

According to a fourteenth aspect of the present invention, there is provided a process for producing rare earth magnetic alloy powders, wherein the nozzle for jetting out the cooling gas is connected to an ultrasonic transducer in order to apply ultrasonic waves to the expelled molten alloy.

According to a fifteenth aspect of the present invention, there is provided a process for producing rare earth magnetic alloy powders, wherein the barrel of vibration of the ultrasonic waves is situated in the delivery passage of the molten alloy.

According to a sixteenth aspect of the present invention, there is provided a process for producing rare earth magnetic alloy powders, wherein a liquid pool portion is formed in the nozzle of a crucible having a nozzle, and the molten alloy in the liquid pool portion is expelled while vibration is applied thereto.

According to a seventeenth aspect of the present invention, there is provided a process for producing rare earth magnetic alloy powders, wherein an induction magnetic field is applied to the molten alloy to be expelled from the nozzle.

According to an eighteenth aspect of the present invention, there is provided a process for producing rare earth magnetic alloy powders, comprising the steps of:
injecting an inert gas from above a rare earth magnetic alloy molten in a crucible to expel the molten alloy from a nozzle formed in the bottom of the crucible; and
colliding the expelled molten alloy with the wing portions of a rotating cooling drum having a plurality of wing portions extending in an axial direction on the flank to produce fine powders of the alloy.

According to a nineteenth aspect of the present invention, there is provided a process for producing rare earth magnetic alloy powders, wherein the falling speed of the molten alloy and the pitch, projection height and moving speed of the wing portions are set such that the falling distance of the molten alloy expelled while the wing portions move one pitch becomes shorter than the projection height of the wing portions.

According to a twentieth aspect of the present invention, there is provided a process for producing rare earth magnetic alloy powders, wherein the rare earth magnetic alloy is R-Fe alloy (R is at least one rare earth metal).

According to a twenty-first aspect of the present invention, there is provided a process for producing rare earth magnetic alloy powders, wherein the rare earth magnetic alloy is R-Fe-B alloy.

According to a twenty-second aspect of the present invention, there is provided a process for producing rare earth magnetic alloy powders, wherein the rare earth magnetic alloy is NdFeB alloy.

According to a twenty-third aspect of the present invention, there is provided a process for producing rare earth magnetic alloy powders, wherein the rare earth magnetic alloy is an iron-rich rare earth magnetic alloy.

According to a twenty-fourth aspect of the present invention, there is provided a process for producing rare earth magnetic alloy powders, wherein the rare earth magnetic alloy is an iron-poor rare earth magnetic alloy.

According to a twenty-fifth aspect of the present invention, there is provided a process for producing rare earth magnetic alloy powders, wherein a cooling gas containing iron powders is blown against the expelled molten alloy to produce fine powders of the alloy.

According to a twenty-sixth aspect of the present invention, there is provided a process for producing rare earth magnetic alloy powders, wherein the iron powders are needle-like iron powders obtained by reducing goethite.

According to a twenty-seventh aspect of the present invention, there is provided a process for producing rare earth magnetic alloy powders, wherein SmFe alloy is molten in place of the rare earth magnetic alloy, and an N₂ gas is blown against the expelled molten alloy to nitride and finely powder the alloy in order to produce SmFeN magnetic alloy powders.

According to a twenty-eighth aspect of the present invention, there is provided a process for producing rare earth magnetic alloy powders, wherein the SmFeN magnetic alloy powders are produced in an N₂ gas atmosphere.

According to a twenty-ninth aspect of the present invention, there is provided an apparatus for producing rare earth magnetic alloy powders, comprising:
a crucible having a nozzle in the bottom;
a jet gas feeder for injecting a high-pressure inert gas from above a rare earth magnetic alloy molten in the crucible; and
a cooling drum positioned below the molten alloy expelled from the nozzle, wherein
the cooling drum is turned, and a plurality of wing portions extending in an axial direction are provided on the flank of the cooling drum to quench and solidify the molten alloy by colliding it against the flank of the cooling drum.

According to a thirtieth aspect of the present invention, there is provided an apparatus for producing rare earth magnetic alloy powders, wherein wavy irregularities extending in an axial direction are formed on at least the faces on a side corresponding to the drum rotating direction of the wing portions.

According to a thirty-first aspect of the present invention, there is provided an apparatus for producing rare earth magnetic alloy powders, which further comprises means of applying a jet stream of cooling water to the contact portion with the molten alloy of the drum.

According to a thirty-second aspect of the present invention, there is provided an apparatus for producing rare earth magnetic alloy powders, wherein a collision board is placed in the scattering direction of the molten alloy collided with the drum.

According to a thirty-third aspect of the present invention, there is provided an apparatus for producing rare earth magnetic alloy powders, comprising:
a crucible having a nozzle in the bottom;
a jet gas feeder for injecting a high-pressure inert gas from above a rare earth magnetic alloy molten in the crucible; and
a cooling gas feeder, having a jet nozzle, for blowing a cooling gas against the expelled molten alloy, wherein
the nozzle is provided with actuators having an end movable in contact with the molten alloy in the nozzle.

According to a thirty-fourth aspect of the present invention, there is provided an apparatus for producing rare earth magnetic alloy powders, wherein a liquid pool portion is formed in the nozzle, and the ends of the actuators are movable in contact with the molten alloy in the liquid pool portion.

According to a thirty-fifth aspect of the present invention, there is provided an apparatus for producing rare earth magnetic alloy powders, wherein the liquid pool portion is substantially spherical.

According to a thirty-sixth aspect of the present invention, there is provided an apparatus for producing rare earth magnetic alloy powders, wherein the actuators are driven by a magneto-distortion transducer or a quartz transducer having a piezoelectric effect.

According to a thirty-seventh aspect of the present invention, there is provided an apparatus for producing rare earth magnetic alloy powders, wherein the drive frequency of the actuators is 50 kHz to 5 MHz.

According to a thirty-eighth aspect of the present invention, there is provided a process for producing a rare earth bond magnet, comprising the steps of:
dispersing rare earth magnetic alloy fine powders manufactured by the process of any one of the third to twenty-eighth aspects in a binder to prepare a resin magnet composition; and
molding this resin magnet composition using a metal mold.

According to a thirty-ninth aspect of the present invention, there is provided a process for producing a rare earth bond magnet, wherein the rare earth magnetic alloy fine powders are heated at a predetermined temperature.

According to a fortieth aspect of the present invention, there is provided a process for producing a rare earth bond magnet, wherein the resin magnet composition is molded while it is aligned in a magnetic field.

According to a forty-first aspect of the present invention, there is provided a process for producing a rare earth bond magnet, wherein the resin magnet composition is manufactured from almost spherical rare earth magnetic alloy fine powders as the fine powders.

According to a forty-second aspect of the present invention, there is provided a process for producing a rare earth bond magnet, wherein the diameters of the rare earth magnetic alloy fine powders are in the range of 2 to 100 µm.

According to a forty-third aspect of the present invention, there is provided a process for producing a rare earth bond magnet, wherein the diameters of the rare earth magnetic alloy fine powders are in the range of 2 to 30 µm.

According to a forty-fourth aspect of the present invention, there is provided a process for producing a rare earth sintered magnet, comprising the step of:
sintering rare earth magnetic alloy fine powders manufactured by the process of any one of the third to twenty-eighth aspects at a predetermined temperature.

According to a forty-fifth aspect of the present invention, there is provided a process for producing a rare earth sintered magnet, wherein the rare earth magnetic alloy fine powders are pressed and aligned in a magnetic field and then sintered.

According to a forty-sixth aspect of the present invention, there is provided a process for producing a rare earth sintered magnet, wherein almost spherical rare earth magnetic alloy fine powders are used as the fine powders.

According to a forty-seventh aspect of the present invention, there is provided a process for producing a rare earth sintered magnet, wherein the diameters of the rare earth magnetic alloy fine powders are in the range of 2 to 30 µm.

According to a forty-eighth aspect of the present invention, there is provided a process for producing rare earth magnetic alloy powders, wherein an inert gas which is let pass through an active metal to remove the residual oxygen contained therein is used as either one or both of the inert gas to be injected from above the rare earth magnetic alloy molten in the crucible and the cooling gas.

According to a forty-ninth aspect of the present invention, there is provided a process for producing rare earth magnetic alloy powders, wherein the active metal has greater standard formation free energy for an oxidation reaction than hydrogen.

According to a fiftieth aspect of the present invention, there is provided a process for producing rare earth magnetic alloy powders, wherein the active metal has greater standard formation free energy for an oxidation reaction than carbon.

According to a fifty-first aspect of the present invention, there is provided a process for producing rare earth magnetic alloy powders, wherein the active metal is any one of K, Cr, Mn, Fe, Co, Ni, Cu, Zn, Sn, W and Pb, or a mixture thereof.

According to a fifty-second aspect of the present invention, there is provided a process for producing rare earth magnetic alloy powders, wherein the active metal is shaped like a mesh.

According to a fifty-third aspect of the present invention, there is provided a process for producing rare earth magnetic alloy powders, wherein the active metal is shaped like a honeycomb.

According to a fifty-fourth aspect of the present invention, there is provided a process for producing rare earth magnetic alloy powders, wherein the inert gas is let pass through a sintered body or porous body of the active metal.

According to a fifty-sixth aspect of the present invention, there is provided an apparatus for producing rare earth magnetic alloy powders, wherein the cooling gas is let pass through a chamber containing an active metal.

According to a fifty-seventh aspect of the present invention, there is provided an apparatus for producing rare earth magnetic alloy powders, wherein at least two chambers through which the cooling gas passes are arranged parallel to each other and can be switched therebetween.

According to a fifty-eighth aspect of the present invention, there is provided an apparatus for producing rare earth magnetic alloy powders, wherein oxygen content detection means for detecting the content of the residual oxygen in the inert gas is mounted on a downstream side of the active metal in the chamber.

The above and other objects, features and advantages of the present invention will become apparent from the following description when taken in conjunction with the accompanying drawings.

### Brief Description of the Drawings

Fig. 1 is a schematic diagram of an apparatus for manufacturing rare earth magnetic alloy powders according to Embodiment 1 of the present invention;
Fig. 2 is a diagram showing the blowing direction of a cooling gas according to Embodiment 1 of the present invention;
Figs. 3(a) and 3(b) are diagrams showing the blowing directions of the cooling gas when there are two blowing directions according to Embodiment 1 of the present invention;
Fig. 4 is a diagram showing the shape of the jet nozzle of the cooling gas according to Embodiment 1 of the present invention;
Fig. 5 is a diagram showing the jet nozzle of the cooling gas connected to an ultrasonic transducer according to Embodiment 1 of the present invention;
Figs. 6(a) and 6(b) are diagrams showing a process for molding an anisotropic bond magnet according to Embodiment 2 of the present invention;
Figs. 7(a) and 7(b) are diagrams for explaining particle growth at the time of sintering according to Embodiment 3 of the present invention;
Fig. 8 is a schematic diagram of an apparatus for producing rare earth magnetic alloy powders according to Embodiment 4 of the present invention;
Fig. 9 is a diagram showing an NdFeB fine powder model sintered at a low temperature according to Embodiment 4 of the present invention;
Fig. 10 is a schematic diagram of an apparatus for producing rare earth magnetic alloy powders according to Embodiment 5 of the present invention;
Fig. 11 is a schematic diagram of an apparatus for producing rare earth magnetic alloy powders according to Embodiment 6 of the present invention;
Fig. 12 is a schematic diagram showing the constitution of the wing portions of a cooling drum according to Embodiment 6 of the present invention;
Fig. 13 is a diagram for explaining the relationship among the size and revolution speed of the cooling drum and the falling speed of a molten alloy according to Embodiment 6 of the present invention;
Figs. 14(a) and 14(b) are diagrams for explaining the state of the molten alloy divided by the wing portions of the cooling drum according to Embodiment 6 of the present invention;
Fig. 15 is a schematic diagram of an apparatus for producing rare earth magnetic alloy powders according to Embodiment 7 of the present invention;
Figs. 16(a) and 16(b) are diagrams showing the constitution of a nozzle according to Embodiment 7 of the present invention;
Figs. 17(a) and 17(b) are diagrams for explaining the delivery state of the molten alloy according to Embodiment 7 of the present invention;
Fig. 18 is a diagram showing the constitution of another nozzle of the present invention;
Fig. 19 is a schematic diagram of an apparatus for producing rare earth magnetic alloy powders according to Embodiment 8 of the present invention; and
Figs. 20(a) and 20(b) are diagrams showing the constitution of an oxygen removing unit according to Embodiment 8 of the present invention.

### Detailed Description of the Preferred Embodiments

Preferred embodiments of the present invention will be described hereinbelow with reference to the accompanying drawings.

### Embodiment 1

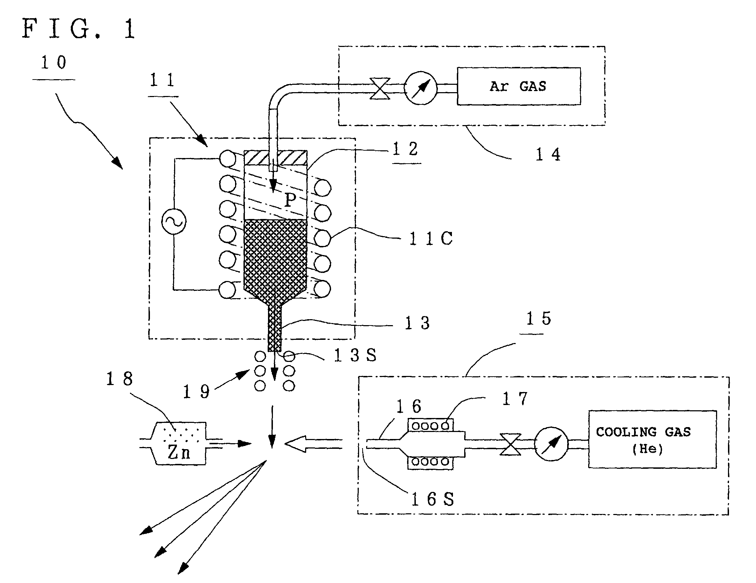

Fig. 1 is a schematic diagram of an apparatus 10 for producing rare earth magnetic alloy powders according to Embodiment 1. In Fig. 1, reference numeral 11 denotes a high-frequency induction furnace having induction coils 11C, 12 a crucible for melting a rare earth magnetic alloy, having a nozzle 13 in the bottom, 14 a jet gas feeder for supplying Ar gas which is an inert gas into the above crucible 12 and injecting a high-pressure Ar gas from above the molten rare earth magnetic alloy, 15 a cooling gas feeder having a jet nozzle 16 for jetting out a cooling gas and gas heating means 17, for blowing a heated He gas against a molten alloy from the nozzle port 13S of the nozzle 13, 18 a Zn vapor feeder for supplying Zn vapor into the delivery passage of the above molten alloy, and 19 induction coils for applying vibration to the delivery passage of the above molten alloy, which are interposed between the nozzle port 13S of the nozzle 13 and the above He gas delivery passage.

A description is subsequently given of the process for producing rare earth magnetic alloy powders.

In Embodiment 1, a process for producing Nd₂Fe₁₄B magnetic alloy powders having a great BH_{Max} (energy product) out of rare earth magnetic alloys will be described.

A mixture of ferroboron (FeB) and solid Fe and Nd as raw materials is placed in the crucible 12 which is then mounted on the inner side of the induction coils 11C of the high-frequency induction furnace 11 and induction heated in an Ar gas atmosphere by applying a high-frequency current to the above induction coils 11C to melt metal elements contained in the above mixture so as to produce a molten Nd₂Fe₁₄B alloy. To produce magnetic alloy powders to be sintered, the content of Nd in the alloy is made slightly higher than that in the above Nd₂Fe₁₄B to form an Nd-rich liquid phase at the time of sintering.

Thereafter, in the above molten state, the jet gas feeder 14 is activated to inject an Ar gas at a predetermined pressure from above the molten Nd₂Fe₁₄B alloy (to be referred to as "molten alloy" hereinafter) in order to expel the above molten alloy in a downward direction from the nozzle port 13S of the nozzle 13 of the above crucible 12.

In this Embodiment 1, a jet stream of He gas heated by the gas heating means 17 is applied to the above expelled molten alloy from the nozzle port 16S of the jet nozzle 16 of the cooling gas feeder 15 in synchronism of the injection of the above Ar gas to collide the above molten alloy with the above He gas so as to scatter the above molten alloy by the energy of this collision and solidify it by quenching. Thereby, almost spherical Nd₂Fe₁₄B alloy fine powders having a diameter of 30 µm or less are obtained.

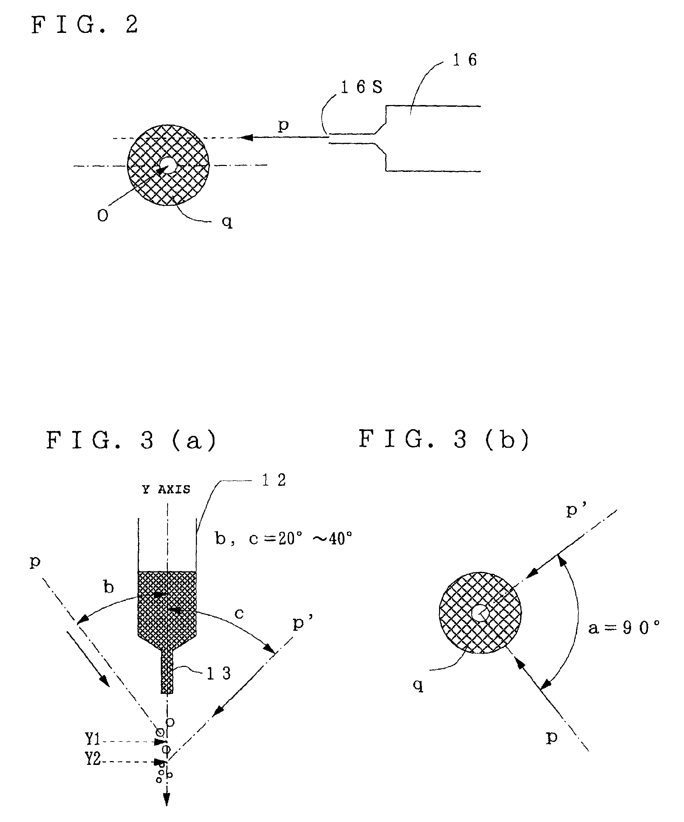

In this Embodiment 1, as shown in Fig. 2, the position of the nozzle port 16S of the above jet nozzle 16 is set such that the direction of the jet stream p of the above He gas becomes perpendicular (horizontal) to the delivery direction of the molten alloy q and away from the center O of the delivery passage of the above molten alloy in order to forcedly provide torque to the above molten alloy, thereby increasing the scattering speed of the above molten alloy and further reducing the diameters of the above Nd₂Fe₁₄B alloy powders.

When the above He gas is blown against the above delivered molten alloy from two different directions, finer powders, for example, super fine powders having a particle diameter of 2 to 10 µm can be obtained.

The above two jet streams p and p' of the He gas are applied to two different points (Y1, Y2) on the Y axis of Fig. 3(a) which is the falling direction (expelling direction) of the molten alloy as shown in Fig. 3(a) and the above jet streams p and p' are desirably applied at a right angle when seen from above (nozzle port 13S side of the crucible 12) as shown in Fig. 3(b).

Further, when the above He gas is blown to ensure that the angles between the jet streams p and p' of the above He gas and the delivery direction of the molten alloy on the Y axis become 20 to 45° as shown in Fig. 3(a), Nd₂Fe₁₄B alloy super fine powders having a smaller diameter can be obtained. The above He gas may be blown against the molten alloy q from three or more directions.

When at least one pair of nozzles for blowing He gas which is a cooling gas from two directions which satisfy either one or both of the conditions that the two directions are perpendicular to each other when see from the nozzle port side of the crucible and that the angle between the delivery direction of the above molten alloy and the blowing direction of the He gas is 20 to 45° are provided to blow the cooling gas against the delivered molten alloy q, it is possible to reduce the diameters of the above alloy powders without fail.

The above He gas itself is heated and blown against the magnetic powders to produce fine magnetic powders in this Embodiment 1.

This prevents an increase in the diameters of the obtained particles due to a rise in the surface tension of the above molten alloy when the molten alloy is cooled by collision between the molten alloy and the above He gas. By blowing the heated He gas, the cooling speed of the scattered molten alloy and the surface tension of the above molten alloy can be reduced, thereby making it possible to obtain finer magnetic powders.

A heater may be mounted around the delivery passage of the above molten alloy to increase the ambient temperature so as to reduce the cooling speed of the scattered molten alloy.

The above cooling gas is not limited to an He gas and may be an inert gas such as Ar gas or N₂ gas. Since the above He gas has high thermal conductivity, the temperature of the gas can be easily increased.

A current is applied to the induction coils 19 positioned near the delivery passage of the molten alloy to generate an induction field so as to apply vibration to the delivered molten alloy, thereby further promoting a reduction in the diameters of the magnetic powders . That is, before the delivered molten alloy collides with the above He gas, vibration is applied to the above molten alloy to increase its apparent viscosity, thereby promoting a reduction in the diameters of the magnetic powders.

Further, since the Zn vapor feeder 18 is used to supply Zn vapor into the delivery passage of the molten alloy in this Embodiment 1, the effect of preventing the oxidation of the surface of each fine powder can be greatly enhanced. This is because the Zn vapor collides with the molten alloy to cool the surface of the molten alloy and reacts with the molten alloy on the surface to form a zinc film on the surface of the solidified fine powder. This zinc film serves to prevent the oxidation of the interior of the fine powder in the step of pressing in a magnetic field and the step of sintering for the production of a sintered magnet from the above fine powders.

Since the above spherical fine powders are less distorted than conventionally milled powders, they have excellent corrosion resistance. Due to the formation of the above zinc film, zinc itself becomes a sacrifice electrode, thereby making it possible to further improve corrosion resistance.

Part of zinc is alloyed and diffused into the interior of each particle but does not deteriorate the characteristic properties of the rare earth magnetic alloy because it is very small in quantity.

Without using the Zn vapor feeder 18, Zn vapor heated at a high temperature may be mixed with the above He gas and supplied to the above delivered molten alloy.

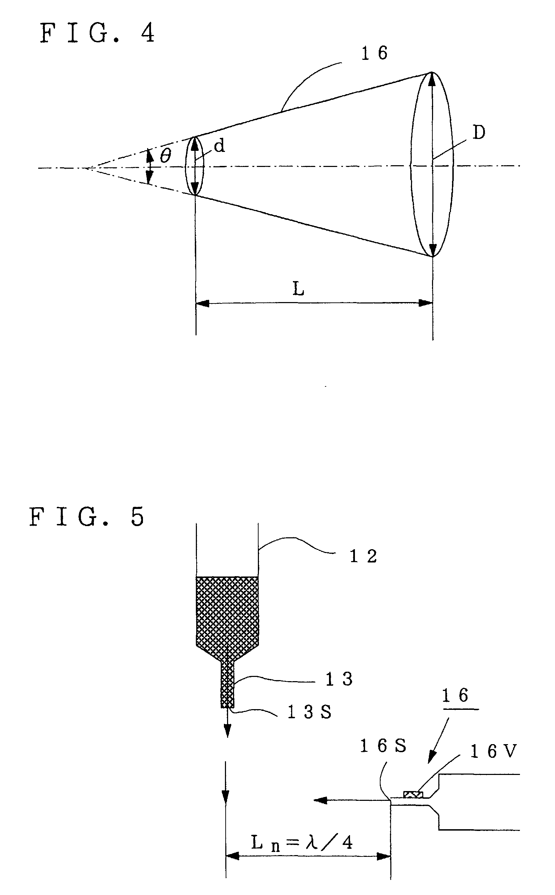

The shape of the jet nozzle 16 which is the jet nozzle of the cooling gas is conical as shown in Fig. 4 to increase the flow rate of the cooling gas to a supersonic speed level. As collision energy between the above cooling gas and the molten alloy is thereby increased, the diameters of the above alloy fine powders can be reduced to 10 µm or less.

The diameter of the above jet nozzle 16 is preferably set to a length (L) which satisfies the relationship 20 < (D/d) < 60 when the apex angle θ is 20 to 40°, d is the opening diameter of an inlet and D is the opening diameter of an outlet.

The opening diameter d of the inlet is set to preferably 0.3 to 8 mm, more preferably 1 to 3 mm. For example, when the d value is set to 1 mm, D is in the range of 20 to 60 mm and the nozzle length L is in the range of 26 to 167 mm in consideration of restriction on the above apex angle θ. When the d value is set to 2 mm, D is in the range of 40 to 120 mm and the nozzle length L is in the range of 52 to 334 mm.

In order to produce rare earth magnetic alloy powders, as shown in Fig. 5, an ultrasonic oscillator 16V is connected to the jet nozzle 16 to apply vibration, thereby making it possible to further reduce the diameters of the magnetic powders. This is because when the above ultrasonic waves propagate and reach the molten alloy, a pressure higher than the jet pressure of the cooling gas is generated in the molten alloy by the above ultrasonic vibration. At this point, the position of the above nozzle port 16S is set such that the distance Lₙ between the nozzle port 16S of the above jet nozzle 16 and the delivery passage of the molten alloy should satisfy the relationship Lₙ = (2n - 1) · (λ/4), that is, the barrel portion of the above ultrasonic vibration is located in the delivery passage of the molten alloy, whereby the cooling gas pressure increasing effect of the above ultrasonic waves can be maximized.

In the above Embodiment 1, the process for producing Nd₂Fe₁₄B alloy fine powders has been described. However, the present invention is not limited to the above alloy fine powders and other rare earth magnetic alloy fine powders such as SmCo and (NdDy)FeB can be produced by the same process as above. It is also possible to obtain an SmFeN magnetic alloy by manufacturing SmFe alloy fine powders and nitriding the fine powders.

In the above example, the above cooling gas is an He gas. However, the present invention is not limited to the He gas and at least one of Ar gas, N₂ gas and He gas or a mixture thereof may be used to prevent the oxidation of the rare earth magnetic alloy powders completely.

### Embodiment 2

In the above Embodiment 1, the process for producing rare earth magnetic alloy fine powders directly from a molten rare earth magnetic alloy has been described. A resin magnet composition is prepared by dispersing almost spherical rare earth magnetic alloy fine powders obtained by the above production process, which rarely experience surface oxidation, have a diameter of 30 µm or less and are uniform in diameter, in a binder and molded using a metal mold to obtain a rare earth bond magnet having excellent magnetic properties.

A process for producing a rare earth bond magnet from the Nd₂Fe₁₄B alloy fine powders (magnetic powders) manufactured in the above Embodiment 1 will be described hereinbelow.

The above Nd₂Fe₁₄B alloy fine powders are aggregates of micro-order crystal particles and have an amorphous structure. They may become dendrite aggregates depending on a cooling state. To produce a bond magnet from the above magnetic powders, the magnetic powders must be changed to a polycrystal form by heating to crystallize their amorphous interior portions so as to increase their saturation magnetic flux density. The above heating temperature is desirably higher than the crystallization temperature of the above Nd₂Fe₁₄B alloy and does not cause particle growth. Specifically, the magnetic powders are heated at 650 to 750°C. When sufficient aging is secured in the heat treatment for recrystallilzation, the magnetic powders can be grown from the polycrystal form to a monocrystal form, thereby making it possible to improve the magnetic properties of the magnetic powders.

An isotropic rare earth bond magnet is generally obtained by manufacturing a resin magnet composition comprising rare earth magnetic alloy fine powders dispersed in a binder such as a thermoplastic resin exemplified by nylon, polyethylene and EVA (ethylene-vinyl acetate copolymer), forming a molded product having a desired shape from this resin magnet composition by injection molding, compressing molding or extrusion molding using a metal mold like known plastic molding, and magnetizing the obtained molded product to a desired magnetization pattern.

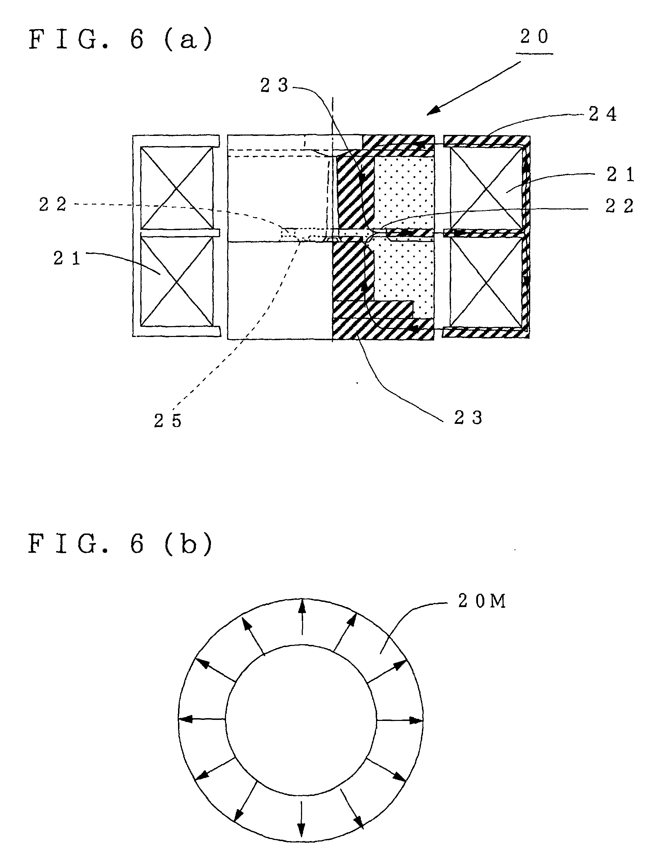

An anisotropic bond magnet can be manufactured by molding the above resin magnet composition while it is aligned in a magnetic field to provide anisotropy to the composition. For example, to produce a ring bond magnet by injection molding in a magnetic field, as shown in Fig. 6(a), electromagnetic coils 21 and 21 are placed around a metal mold 20, and soft magnetic materials 23 and 24 are arranged around a ring cavity 22 formed in the metal mold 20 and around the above coils to form a magnetic passage that a magnetic field from the above coils 21 and 21 is directed toward the radial direction of the above cavity 22, thereby forming a radially aligning magnetic field for the above cavity 22. Therefore, the magnetic powders contained in the resin magnet composition introduced into the above cavity 22 from a gate 25 are aligned so that their magnetization directions become the radial direction in order to manufacture a radially aligned ring bond magnet 20M as shown in Fig. 6(b).

Since the above magnetic powders are almost spherical with a difference between the long axis and the short axis of 20 % or less, they are aligned more easily than the conventional square particles. That is, as the above magnetic powders are easily turned so that the c axis in the tetragonal crystal of each magnetic powder is directed toward the magnetic field applied to the inside of the cavity of the metal mold, the aligning properties of the magnetic powders become high and the magnetic properties of the molded bond magnet can be improved.

Since the magnetic powders are spherical, a cavity is hardly formed at the interface between the resin as the binder and the magnetic powder, thereby making it possible to improve strength and corrosion resistance.

Further, since the amount of a lubricating additive such as a surface treating agent can be reduced due to the easy rotation of the magnetic powder and the strength of the magnetic field applied at the time of alignment can be lowered, the system can be made small in size.

### Embodiment 3

In the above Embodiment 2, the process for manufacturing a rare earth bond magnet from rare earth magnetic alloy fine powders directly produced from a molten rare earth magnetic alloy has been described. In this Embodiment 3, a process for producing a sintered magnet from the above fine powders will be described.

The above Nd₂Fe₁₄B alloy fine powders (magnetic powders) have an amorphous structure and are isotropic because they are aggregates of particles as described above. Therefore, in order to produce a sintered magnet from the above magnetic powders, they must be recrystallized to increase their saturation magnetic flux density and provide anisotropy.

As the sintering temperature for growing particles from the magnetic powders is generally higher than the crystallization temperature of the above Nd₂Fe₁₄B alloy, a heat treatment for crystallization is not always necessary (the sintering temperatures of other rare earth magnetic alloys are generally higher than their crystallization temperatures).

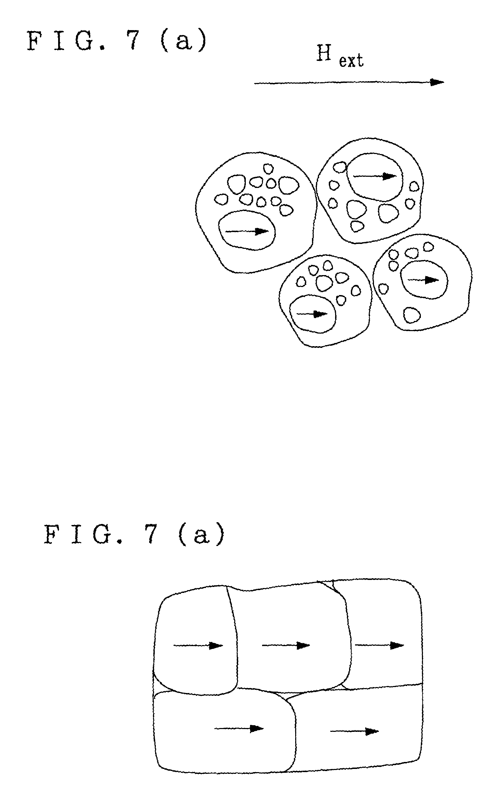

Sintering is carried out after the above magnetic powders are mixed with a binder and the resulting mixture is shaped, pressed and aligned in a magnetic field. Since the rare earth magnetic alloy fine powders are almost spherical and uniform in diameter as described above, the magnetic powders are easily turned so that the c axis of each magnetic powder is directed toward the applied magnetic field, thereby improving aligning properties. As shown in Fig. 7(a), particles having a relatively large diameter and accounting for a greater part of the total volume first become anisotropic in magnetism. As shown in Fig. 7(b), the particles adhere to one another by the diffusion phenomenon of atoms with the result of a reduction in the number of spaces and the above large particles promote particle growth and eliminate small particles, thereby enhancing the alignment of the c axis of each constituent particle of a sintered body. Therefore, the saturation magnetic flux density of the sintered magnet can be increased and the magnetic properties of the magnet can be improved.

In this Embodiment 3, the process for manufacturing a sintered magnet from the Nd₂Fe₁₄B alloy fine powders has been described. However, the present invention is not limited to the above magnetic powders, and a rare earth sintered magnet having excellent magnetic properties can be produced from other rare earth magnetic alloy fine powders such as SmCo and (NdDy)FeB by the same process.

### Embodiment 4

Studies are now being made on a nano-order composite magnet having a great energy product (BH)_{Max} which is obtained even when the content of a rare earth metal in an alloy is reduced, making use of the fact that a nano-order hard phase and soft phase are made coexistent in a magnet composition to suppress the reversal of magnetization by the exchange function of the above two phases. In this Embodiment 4, a process for producing the above nano-order composite magnetic from fine powders containing the residual micro-order iron or iron-based alloy therein which are directly manufactured from a molten rare earth magnetic alloy will be described.

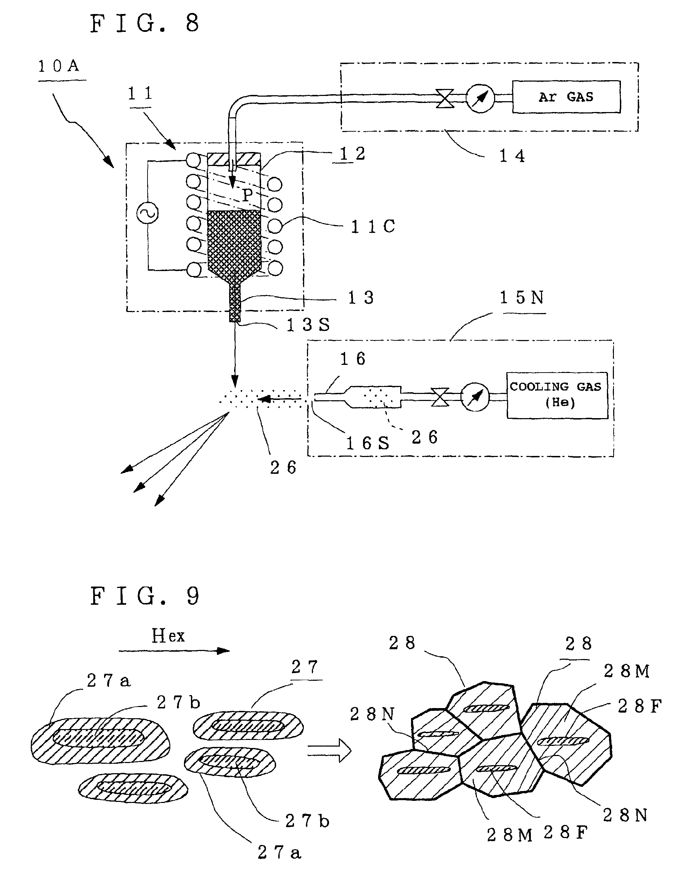

Fig. 8 is a schematic diagram of an apparatus 10A for producing rare earth magnetic alloy powders used in this Embodiment 4. In Fig. 8, reference numeral 11 denotes a high-frequency induction furnace having induction coils 11C, 12 a crucible, having a nozzle 13 in the bottom, for melting a rare earth magnetic alloy, 14 a jet gas feeder for supplying an Ar gas which is an inert gas into the above crucible 12 and injecting a high-pressure Ar gas from above a molten rare earth magnetic alloy, and 15N a cooling gas feeder, having a jet nozzle 16, for blowing an He gas containing iron powders 26 against a molten alloy delivered from the above nozzle 13.

A description is subsequently given of a process for producing rare earth magnetic alloy powders for a nano-order composite magnet.

A mixture obtained by mixing ferroboron (FeB) and solid Fe and Nd as raw materials to ensure that the content of Fe is lower than that of Nd₂Fe₁₄B (NdB-rich alloy) is placed in the crucible 12 which is then mounted on the inner side of the induction coils 11C of the high-frequency induction furnace 11 and induction heated in an Ar gas atmosphere by applying a high-frequency current to the above induction coils 11C to melt metal elements contained in the above mixture so as to produce a molten NdB-rich NdFeB alloy. Thereafter, in the above molten state, the jet gas feeder 14 is activated to inject an Ar gas at a predetermined pressure from above the molten NdFeB alloy (to be referred to as "molten alloy" hereinafter) in order to expel the above molten alloy in a downward direction from the nozzle port 13S of the nozzle 13 of the above crucible 12.

In this Embodiment 4, a jet stream of He gas containing iron powders is applied to the above expelled molten alloy from the nozzle port 16S of the jet nozzle 16 of the cooling gas feeder 15N in synchronism with the injection of the above Ar gas to collide the above molten alloy with the above He gas so as to scatter the above molten alloy by collision energy and solidify it by quenching. The above iron powders 26 are needle-like micro-order iron powders obtained by reducing goethite (αFeOOH).

An NdB-rich phase such as an Nd₂Fe₁₄B phase is formed on the surface of each of the above iron powders by collision between the above iron powder 26 and the above NdB-rich molten alloy, thereby obtaining a composite fine powder consisting of a surface portion having a non-magnetic NdB-rich phase and an interior portion having a ferromagnetic Fe phase.

In this Embodiment 4, the position of the nozzle port 16S of the jet nozzle 16 is set such that the direction of the jet stream p of the above He gas becomes perpendicular (horizontal) to the delivery direction of the above molten alloy q and away from the center of the delivery passage of the above molten alloy as shown in Fig. 2 of the above Embodiment 1 to forcedly provide torque to the above molten alloy so as to increase the scattering speed of the above molten alloy, thereby making it possible to reduce the diameters of the composite fine powders.

By sintering the above composite fine powders, a sintered magnet having high magnetic properties can be produced. Stated more specifically, the composite powders obtained by the above process are mixed with a binder, and the resulting mixture is pressed in a magnetic field and temporarily molded. At this point, each particle of the above composite fine powders turns such that the long axis of the interior ferromagnetic Fe phase is directed toward the applied magnetic field. Thereafter, when the temporarily molded product is sintered at a temperature around 1,000°C, an Nd₂Fe₁₄B magnet is obtained by mutual diffusion. Since the magnet obtained by this process is such that crystal particles are well aligned in the direction of the magnetic field, it has higher magnetic properties than conventional magnets.

Meanwhile, composite fine powders 27, each consisting of a non-magnetic surface portion having an NdB-rich phase 27a and an interior portion having a ferromagnetic Fe phase 27b, are sintered by controlling sintering conditions like the fine powder model shown in Fig. 9 to produce a sintered magnet in which a soft αFe phase 28F remains in the interior of each particle of the sintered body and a hard Nd₂Fe₁₄B alloy phase 28M is formed in the other portion including the surface. Stated more specifically, the above composite fine powders 27 are sintered at a temperature (about 700°C) around the equilibrium temperature in the lower part of the state diagram to cause the αFe phase 28F to remain in the interior portion of each particle 28, whereby the magnetic properties of the obtained sintered magnet can be improved by an exchange spring effect obtained by the above two-phase exchange function.

When the above exchange spring effect is utilized, the content of iron in the alloy is high, thereby making it possible to reduce the amount of the used rare earth metal. However, in the above case, the content of the rare earth metal in the molten alloy must be reduced to a level equal to that of the final product.

In the above Embodiment 4, the process for producing an NdFeB sintered magnet has been described. A magnet made from another iron-based rare earth magnetic alloy can be produced by the same process as described above.

In the above example, fine powders are obtained by blowing a cooling gas containing iron powders 26 against an NdB-rich molten alloy from the crucible 12. An Fe-rich rare earth magnetic alloy is molten in the crucible 12 and a cooling gas is blown against the above molten alloy to solidify the alloy by quenching so as to produce rare earth magnetic powders containing micro-order iron or iron-based alloy in the interior portion of each particle.

### Embodiment 5

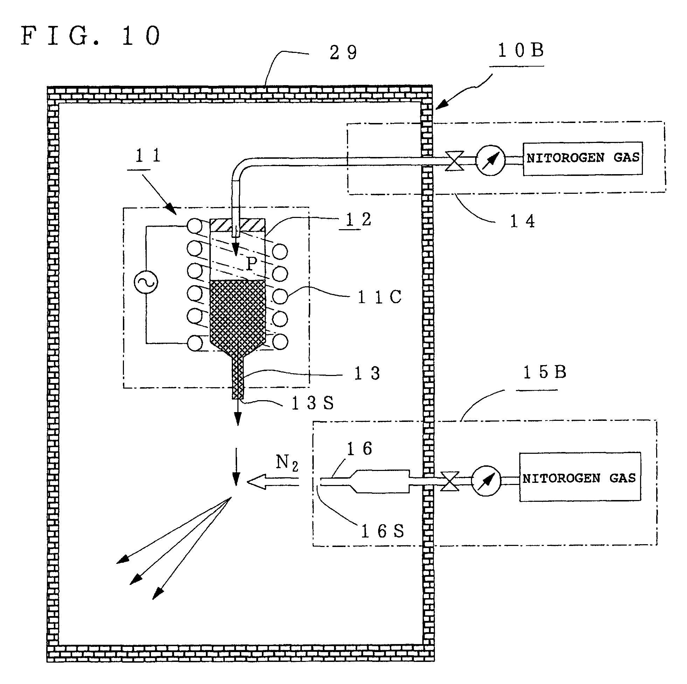

To produce SmFeN magnetic alloy fine powders, SmFe alloy fine powders are produced by the same production process as in the above Embodiment 1 and then nitrided to produce an SmFeN magnetic alloy. In this Embodiment 5, a production apparatus shown in Fig. 10 is used to directly produce SmFeN magnetic alloy fine powders. In Fig. 10, reference numeral 11 denotes a high-frequency induction furnace having induction coils 11C, 12 a crucible, having a nozzle 13 in the bottom, for melting an SmFe alloy, 14 a jet gas feeder for supplying an N₂ gas which is an inert gas into the upper part of the above crucible 12 and injecting a high-pressure N₂ gas from above the molten SmFe alloy, and 15B a cooling gas feeder, having a jet nozzle 16, for blowing an N2 gas for nitriding the molten alloy from the nozzle port 13S of the above nozzle 13. The above delivered SmFe alloy is nitrided with this N₂ gas to manufacture SmFeN magnetic alloy fine powders.

Further, in this Embodiment 5, a treatment chamber 29 surrounding a space which is the delivery passage of the molten alloy including at least the above crucible 12 is formed and air in the above treatment chamber 29 is substituted with an N₂ gas in advance to produce the above SmFeN magnetic alloy powders in an N2 gas atmosphere.

A description is first given of the process for producing SmFeN alloy fine powders using the above apparatus 10B.

First, a mixture of solid Sm and Fe in a predetermined ratio is placed in the crucible 12 which is then mounted on the inner side of the induction coils 11C of the high-frequency induction furnace 11 and induction heated by applying a high-frequency current to the above induction coils 11C so as to melt the above mixture, thereby producing a molten SmFe alloy. The atomic ratio of the above SmFe alloy is 2:17.

Thereafter, in the above molten state, the jet gas feeder 14 is activated to inject an N₂ gas at a predetermined pressure from above the molten Sm₂Fe₁₇ alloy (to be referred to as "molten alloy" hereinafter) to expel the above molten alloy in a downward direction from the nozzle port 13S of the nozzle 3 of the above crucible 12. At this point, a jet stream of N2 gas is applied to the above expelled molten alloy from the nozzle port 16S of the jet nozzle 16 of the cooling gas feeder 15B in synchronism with the injection of the above N₂ gas to collide the above delivered molten alloy with the above jet stream of N₂ gas so as to nitride the above delivered Sm₂Fe₁₇ alloy and scatter the above molten alloy by this collision energy to solidify the molten alloy by quenching, thereby obtaining almost spherical Sm₂Fe₁₇N alloy fine powders having a diameter of 30 µm or less.

The above Sm₂Fe₁₇N alloy fine powders are aggregates of micro-order crystal particles and have a crystalline, amorphous or mixed structure. They may become dendrite aggregates depending on a cooling condition.

In this Embodiment 5, since the Sm₂Fe₁₇ alloy is kept in an N₂ gas atmosphere in a molten state and the step of solidification by quenching, an amount of nitrogen for obtaining a chemical equilibrium state is contained in the noncrystalline lattice of the above Sm₂Fe₁₇.

Also in this Embodiment 5, the position of the nozzle port 16S of the above jet nozzle 16 is set such that the direction of a jet stream p of the above N₂ gas is perpendicular (horizontal) to the delivery direction of the molten alloy q and away from the center of the delivery passage of the above molten alloy like the example shown in Fig. 2 of the above Embodiment 1 to forcedly provide torque to the above molten alloy so as to increase the scattering speed of the molten alloy, thereby further reducing the diameters of the above alloy fine powders. When the above N₂ gas is blown against the molten alloy q from the two different directions p and p' like the example shown in Fig. 3 of the above Embodiment 1, finer powders, for example, super fine powders having a diameter of 2 to 10 µm can be obtained. The above N₂ gas may be blown against the molten alloy q from three or more directions. The diameters of rare earth magnetic alloy fine powders used in the bond magnet of the present invention are preferably in the range of 2 to 50 µm, more preferably 2 to 10 µm.

A description is subsequently given of the process for producing a bond magnet from the above Sm₂Fe₁₇N alloy fine powders (magnetic powders).

Since the above magnetic powders have a crystalline, amorphous or mixed structure as described above, to produce a bond magnet from the above magnetic powders, they must be changed to a polycrystal form having a controlled diameter by heating to crystallize their amorphous interior portions. During this heat treatment step, N atoms contained in the noncrystalline lattice of Sm₂Fe₁₇N are introduced between crystal lattices to produce Sm₂Fe₁₇N as magnetic powders having anisotropy. Since a nitrogen-rich layer is formed on the surface of the above Sm₂Fe₁₇N, Sm₂Fe₁₇N has excellent oxidation resistance and abrasion resistance.

An isotropic Sm₂Fe₁₇N bond magnet is obtained by dispersing fine powders of the above Sm₂Fe₁₇N magnetic alloy into a thermoplastic resin binder such as nylon, polyethylene or EVA (ethylene-vinyl acetate copolymer) to manufacture a resin magnet composition, forming a molded article having a desired shape from the resin magnet composition by injection molding, compression molding or extrusion molding using a metal mold, and magnetizing the molded article to a desired magnetization pattern.

An anisotropic bond magnet can also be produced by molding the above resin magnet composition while aligning it in a magnetic field to provide anisotropy.

Since the magnetic powders obtained in this embodiment are almost spherical with a difference between the long axis and the short axis of 20 % or less, they are aligned more easily than conventional square particles. That is, as the above magnetic powders are easily turned so that the c axis in the tetragonal crystal of each magnetic powder is directed toward the magnetic field applied to the inside of the cavity of the metal mold, the aligning properties of the magnetic powders become high and the magnetic properties of the molded bond magnet can be improved.

Since the magnetic powders are spherical, a cavity is hardly formed at the interface between the resin which is a binder and each magnetic powder, and strength and corrosion resistance can be thereby improved.

Further, the amount of a lubricating additive such as a surface treating material can be reduced and the strength of the applied magnetic field for alignment can be lowered due to the easy rotation of the magnetic powder, whereby the system can be reduced in size.

### Embodiment 6

In the above Embodiments 1, 4 and 5, an inert gas is injected from above the rare earth magnetic alloy molten in the crucible 12, the above molten alloy is expelled from the nozzle port 13S in the bottom of the above crucible 12, and a cooling gas is blown against the above expelled molten alloy to produce fine powders of the above alloy. Rare earth magnetic alloy fine powders which are uniform in diameter can also be directly produced by colliding the above delivered molten alloy with a rotating cooling drum.

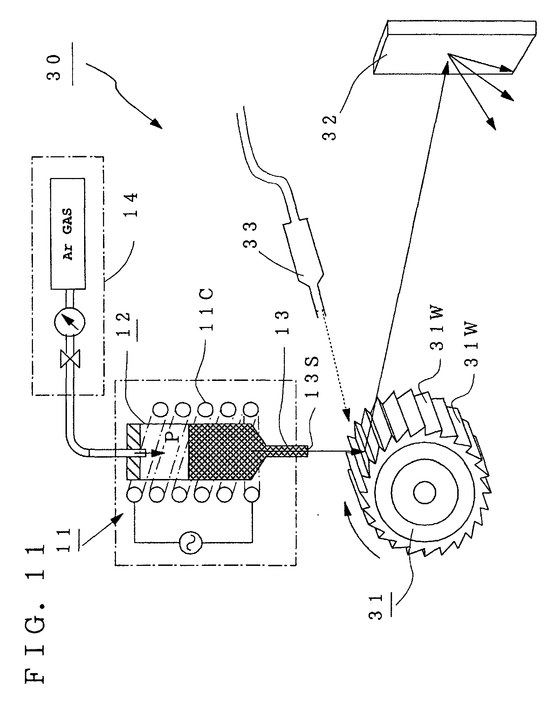

Fig. 11 is a schematic diagram of an apparatus 30 for producing rare earth magnetic alloy powders according to Embodiment 6. In Fig. 11, reference numeral 11 denotes a high-frequency induction furnace having induction coils 11C, 12 a crucible, having a nozzle 13 in the bottom, for melting a rare earth magnetic alloy, 14 a jet gas feeder for supplying an Ar gas which is an inert gas into the above crucible 12 and injecting a high-pressure Ar gas from above the molten rare earth magnetic alloy, 31 a cooling drum positioned below the delivery passage of the molten alloy from the nozzle 13 and having a plurality of wing portions 31W extending in an axial direction on the flank. This cooling drum 31 is turned by an unshown motor and the above molten alloy is collided with the flank of the cooling drum 31 having the above wing portions 31W. Denoted by 32 is a collision board placed in the scattering direction of the molten alloy which has collided with the cooling drum 31, and 33 a cooling water feeder for supplying a jet stream of cooling water to a position where the delivered molten alloy contacts the above cooling drum 31.

The shape of the nozzle port 13S of the above nozzle 13 is rectangular with long sides parallel to the axial direction of the above cooling drum so that the delivered molten alloy is formed like a belt. The above cooling drum 31 has a cooling water passage therein and is made from copper having excellent heat conductivity to cool the molten alloy which collides with the above flank.

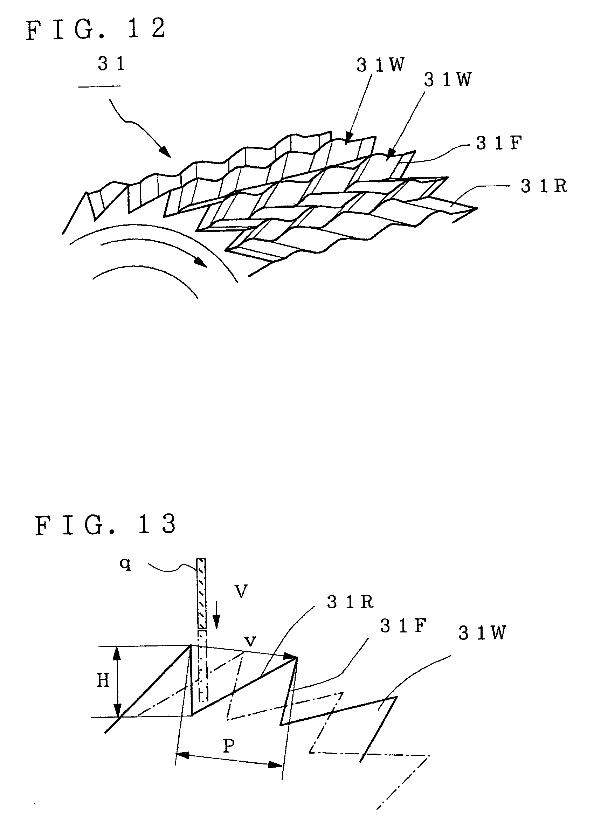

As shown in Fig. 12, the flank of the above cooling drum 31 has a saw-like cross section with a plurality of wing portions 31W, each consisting of a collision face 31F on a side corresponding to the drum rotation direction and a rear face 31R adjacent to this collision face 31F, and wavy irregularities are formed on the above collision face 31F and the above rear face 31R in the axial direction of the above cooling drum 31.

In this Embodiment 6, as shown in Fig. 13, the revolution speed of the cooling drum 31 is set such that the falling distance of the delivered molten alloy becomes shorter than the projecting height of the above wing portion 31W while the wing portion 31W moves 1 pitch, that is, the wing portion 31W moves at least the pitch P while the end of the delivered molten alloy q reaches from the distal end portion of the wing portion 31W to the root portion, that is, the end of the molten alloy moves only the projection height H of the wing portion 31W to collide the delivered belt-like molten alloy q with the collision face 31F of the above wing portion 31W so as to divide it without fail, thereby obtaining fine powders having a small diameter and uniform in diameter.

More specifically, when the projection height of the wing portion 31W is represented by H, the pitch of the wing portions 31W is represented by P, the moving speed of the wing portions 31W is represented by v and the falling speed of the molten alloy is represented by V, the parameters V, P, v and H are set to satisfy the relationship V·(P/V) < H (see Fig. 13).

A description is subsequently given of the process for producing rare earth magnetic alloy powders.

In this Embodiment 6, the process for producing Nd₂Fe₁₄B magnetic alloy powders having a great BH_{Max} (energy product) out of rare earth magnetic alloys will be described.

A mixture of ferroboron (FeB) and solid Fe and Nd as raw materials is first placed in the crucible 12 which is then mounted on the inner side of the induction coils 11C of the high-frequency induction furnace 11, and a high-frequency current is applied to the above induction coils 11C to induction heat the above mixture in an Ar gas atmosphere to melt metal elements contained in the above mixture, thereby producing a molten Nd₂Fe₁₄B alloy. To produce magnetic alloy powders to be sintered, an alloy having a higher content of Nd than that of the above Nd₂Fe₁₄B is produced to form an Nd-rich liquid phase at the time of sintering.

Thereafter, in the above molten state, the jet gas feeder 14 is activated to inject an Ar gas at a predetermined pressure from above the above molten Nd₂Fe₁₄B alloy (to be referred to as "molten alloy" hereinafter) so as to deliver the above molten alloy to the rotating flank of the cooling drum 31 positioned below the nozzle port 13S of the above crucible 12.

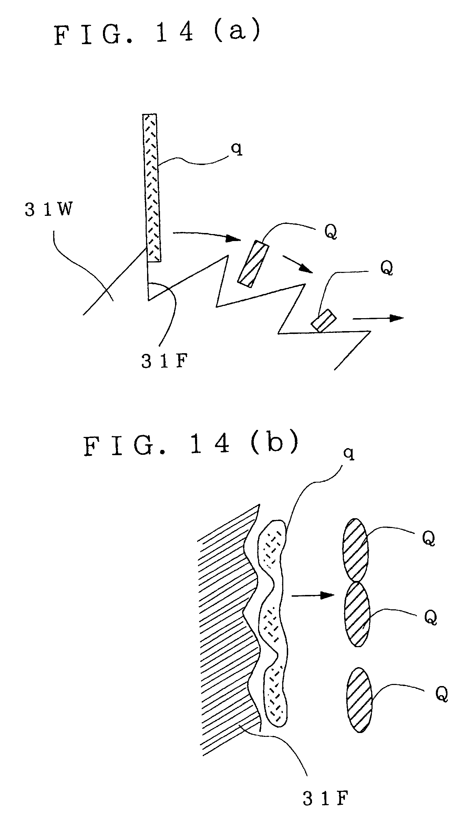

The above molten alloy q is continuously delivered from the nozzle port 13S (into a belt form). As shown in Fig. 14(a), the above delivered belt-like molten alloy q is collided with the collision face 31F of the wing portion 31W of the cooling drum revolving at a high speed to be divided into pieces and quenched/solidified and the obtained solid metal Q leaps out in the tangent direction of the cooling drum 31. At this point, as shown in Fig. 14(b), the molten alloy q is quenched/solidified while it is deformed in conformity with the wavy irregularities formed on the collision face 31F or divided into pieces.

The solid metal Q divided and deformed to a wavy pattern in a width direction is collided with the collision board 32 installed in the above leaping direction at a high speed and divided into pieces in the width direction of the above wavy pattern by the impact, thereby making it possible to produce Nd₂Fe₁₄B magnetic alloy fine powders having a small diameter and uniform in diameter.

In this Embodiment 6, the cooling water feeder 33 supplies a jet stream of cooling water to a contact portion with the molten alloy of the above cooling drum 31 to further cool the solidifying molten alloy, and the pressure of the above jet stream makes it easy to separate the solid metal Q from the cooling drum 31. Since the cooling drum 31 is made from copper having a different thermal expansion coefficient from the Nd₂Fe₁₄B magnetic alloy which is an iron-based alloy, it is easy to separate the solid metal Q from the cooling drum 31 due to the difference of thermal expansion coefficient.

The Nd₂Fe₁₄B alloy fine powders (magnetic powders) obtained by the above process are aggregates of micro-order crystal particles having an amorphous structure. They may become dendrite aggregates depending on a cooling condition. Since the magnetic powders are aggregates of particles, they are isotropic. Therefore, to produce a bond magnet or sintered magnet from the above magnetic powders, the magnetic powders must be recrystallized to increase their saturation magnetic flux density and provide anisotropy.

For example, when the above magnetic powders are used as the material of a bond magnet, they must be heated at a predetermined temperature to crystallize their amorphous interior portions so as to change to a polycrystal form. The above treatment temperature is desirably higher than the crystallization temperature of the above Nd₂Fe₁₄B alloy and does not cause particle growth. Specifically, the magnetic powders are heated at 650 to 750°C.

As for the shape of the magnetic powders obtained in this Embodiment 6, the end portions of magnetic powders obtained by cold milling an amorphous thin belt produced by the conventional quenching method are flat whereas the end portions of the magnetic powders obtained by milling during cooling or right after cooling are round. Therefore, when a resin magnet composition prepared by dispersing the above fine powders in a binder is molded while it is aligned in a magnetic field, the fine powders are aligned more easily than the above conventional square particles. That is, since the above magnetic powders are easily turned so that the c axis in the hexagonal crystal of each magnetic powder is directed toward the magnetic field applied to the inside of the cavity of the mold, the aligning properties of the magnetic powers become high, the magnetic properties of the molded bond magnet can be improved, and the strength of the application magnetic field can be reduced. As a result, the system can be reduced in size. In the case of injection molding, as the magnetic powders have a uniform small diameter and a round end portion, they have high flowability, whereby the power of an injection machine can be reduced and a surface treating agent for improving flowability can be reduced in quantity or omitted.

When the above magnetic powders are used as the material of a sintered magnet, the sintering temperature for growing particles from the above magnetic powders is higher than the crystallization temperature of the above Nd₂Fe₁₄B alloy. Therefore, a heat treatment for crystallization does not need to be always carried out (the sintering temperature for other rare earth magnetic alloys are generally higher than their crystallization temperatures). Sintering is carried out after the above magnetic powders are mixed with a binder, shaped, pressed in a magnetic field and aligned. In the above alignment, out of the particles of the magnetic powders, particles which account for a greater part of the total volume first become anisotropic in magnetism. Since the end portions of the magnetic powders are round as in the case of the above bond magnet, the magnetic powders are easily turned so that the c axis of each magnetic powder in the crystal is directed toward the applied magnetic field and thereby the aligning properties of the magnetic powders are improved. The above binder is mixed to improve the slipperiness of the particles and prevent the oxidation of the particles and decomposes at the time of sintering. Therefore, this component does not remain in the sintered magnet.

In the above Embodiment 6, wavy irregularities are formed on the collision face 31F and the rear face 31R of the wing portion 31W. The above wavy irregularities may be existent only on the collision face 31F.

In the above embodiment, the process for producing Nd₂Fe₁₄B alloy fine powders has been described. The present invention is not limited to the above fine powders. Fine powders of other rare earth metal alloys such as SmCo and (NdDy)FeB may be produced by the same process.

In the above production process, an SmFeN magnetic alloy can be obtained by producing SmFe alloy fine powders and nitriding the fine powders.

### [Example]

The comparison results of the particle states of Nd₂Fe₁₄B alloy powders produced by changing the projection height H and pitch P of the wing portion 31W, the moving speed v of the wing portion 31W and the falling speed V of the molten alloy are shown in Table 1 below.

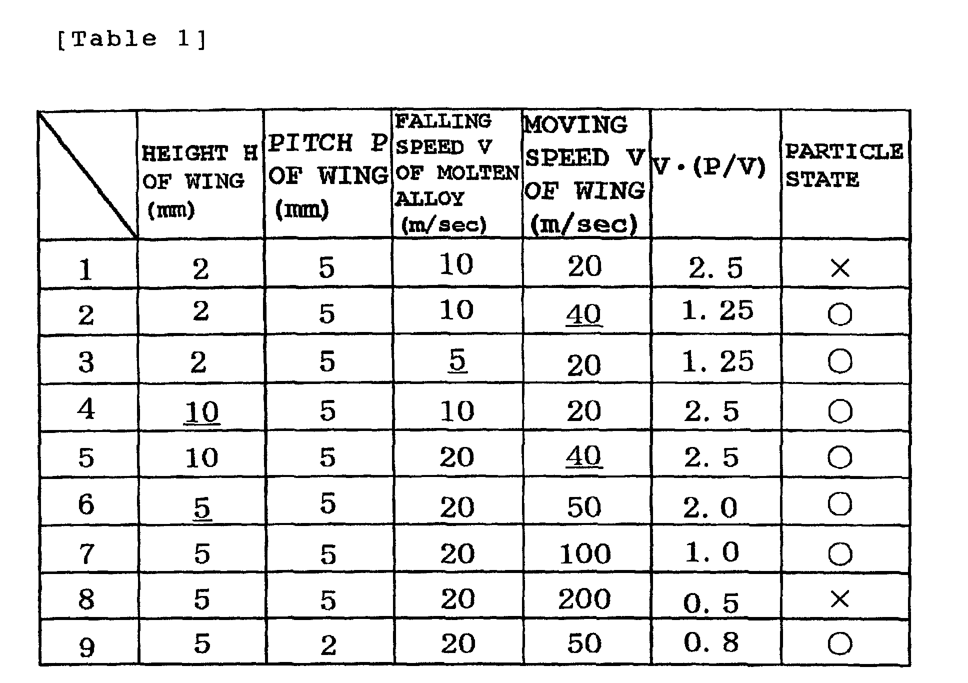

Thereby, it has been confirmed that rare earth magnetic alloy fine powders can be directly produced by setting the revolution speed of the cooling drum 31, that is, the moving speed v of the wing portion 31W and the falling speed V of the molten alloy to satisfy the relationship V · (P/v) < H when the projection height and pitch of the wing portion 31W are represented by H and P, respectively.

When the moving speed v is much faster than the falling speed of the molten alloy like Example 9 of the above Table 1, the molten alloy is not divided into pieces but becomes a continuous thin belt.

### Embodiment 7

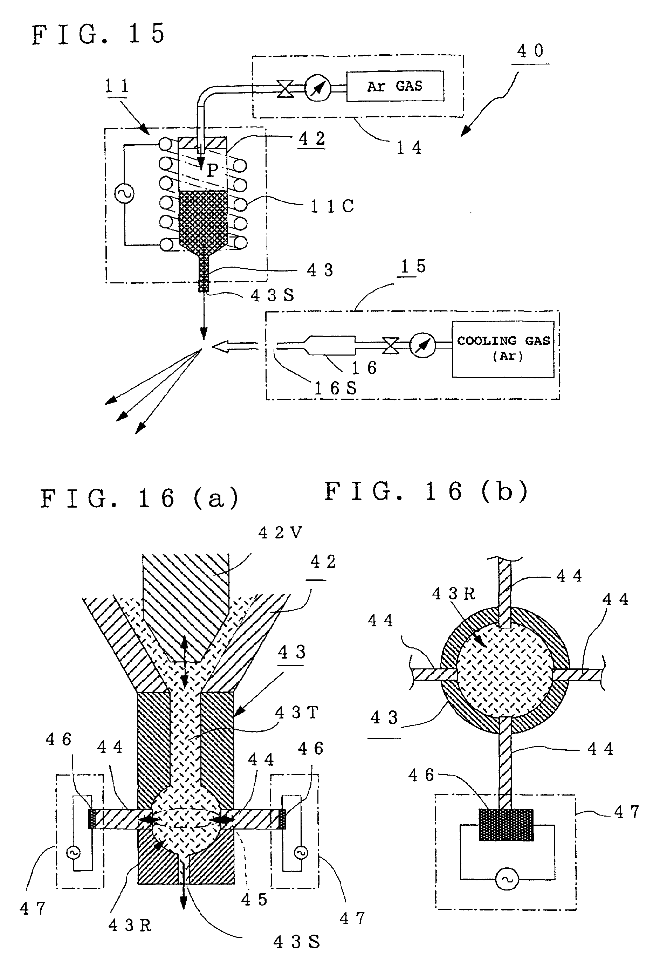

Fig. 15 is a schematic diagram of an apparatus 40 for producing rare earth magnetic alloy powders according to Embodiment 7. Figs. 16(a) and 16(b) show the constitution of a crucible and a nozzle used in this Embodiment 7. In these figures, reference numeral 11 denotes a high-frequency induction furnace having induction coils 11C, 42 a crucible, provided with a nozzle 43 having a liquid pool to be described in detail hereinafter in the bottom, for melting a rare earth magnetic alloy, 14 a jet gas feeder for supplying an Ar gas which is an inert gas into the above crucible 42 and injecting a high-pressure Ar gas from above the molten rare earth magnetic alloy, and 15 a cooling gas feeder, having a jet nozzle 16, for blowing an Ar cooling gas against the molten alloy delivered from the above nozzle 43. 42V represents a valve installed in the crucible 42 to shut down the delivery passage 43T of the molten alloy in the nozzle 43 connected to the lower end of the crucible 42 at the time of melting the rare earth magnetic alloy and open the above delivery passage 43T at the time of expelling the molten alloy.

The above nozzle 43 has a substantially spherical liquid pool portion 43R which is larger in diameter than the above delivery passage 43T near the nozzle port 43S in the above delivery passage 43T and end portions of cylindrical pistons 44 which are an actuator are inserted into the liquid pool portion 43R.

Stated more specifically, a cylindrical through hole 45 is formed at four symmetrical positions near the equator of the above spherical liquid pool portion 43R from the side of the nozzle 43 and the cylindrical pistons 44 are inserted into the above respective through holes 45 such that end faces thereof are situated in the space of the above liquid pool portion 43R. Meanwhile, the other ends of the pistons 44 are connected to vibration generating means 4 which are provided with a quartz transducer 46 having a piezoelectric effect and vibrate in the longitudinal direction of the pistons 44. By driving the above quartz transducers 46 at a predetermined frequency, the above end faces of the above pistons 44 vibrate in the center direction of the liquid pool portion 43R, that is, a direction perpendicular to the falling direction of the molten alloy in the liquid pool portion 43R.

A description is subsequently given of the process for producing rare earth magnetic alloy powders according to Embodiment 7.

A mixture of ferroboron and solid Fe and Nd as raw materials is placed in the crucible 42 which is then mounted on the inner side of the induction coils 11C of the high-frequency induction furnace 11, and a high-frequency current is applied to the above induction coils 11C to induction heat the above mixture in an Ar gas atmosphere so as to melt metal elements contained in the above mixture, thereby producing a molten Nd₂Fe₁₄B alloy. To produce magnetic alloy powders to be sintered, an alloy having a higher content of Nd than that of the above Nd₂Fe₁₄B is produced to form an Nd-rich liquid phase at the time of sintering.

Thereafter, in the above molten state, the valve 42V in the crucible 42 is opened and the jet gas feeder 14 is activated to inject an Ar gas from above the above molten Nd₂Fe₁₄B alloy (to be referred to as "molten alloy" hereinafter) at a predetermined pressure so as to expel the above molten alloy in a downward direction from the nozzle port 43S of the above nozzle 43.

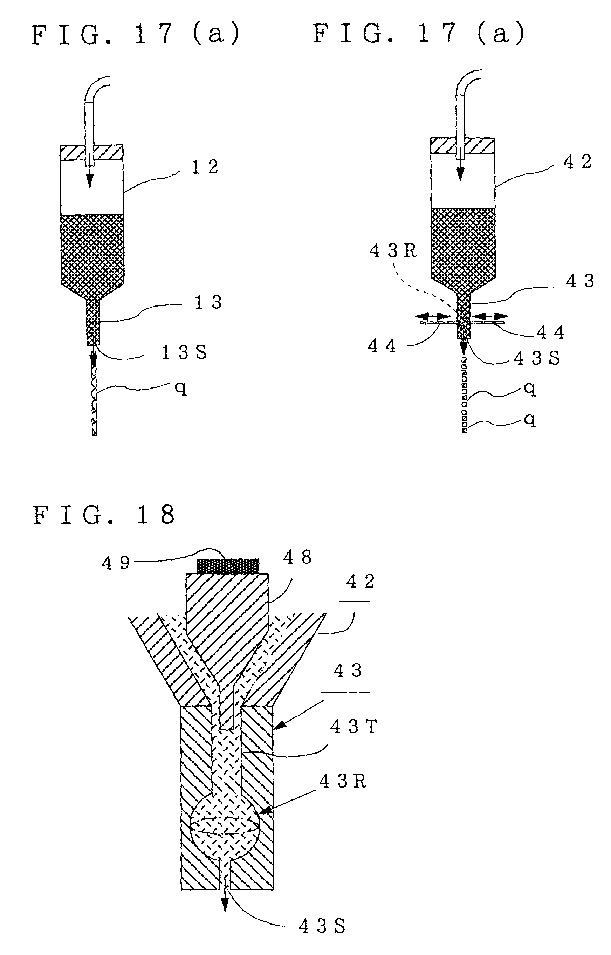

When the conventional nozzle structure is used, as shown in Fig. 17(a), the above molten alloy q is continuously delivered from the nozzle port 13S. In this Embodiment 7, the vibration generating means 47 apply a high-frequency current to the quartz transducers 46 connected to the four pistons 44 inserted into the liquid pool portion 43R in the nozzle 43 to expand and contract the quartz transducers 46, thereby vibrating the four pistons 44. Since the vibration pressures of the above four pistons 44 are thereby applied to the molten alloy guided into the liquid pool portion 43R from the delivery passage 43T of the nozzle 43, alternating pressures are generated in the molten alloy in the liquid pool portion 43R and try to pass through the lower portion of the nozzle. Therefore, as shown in Fig. 17(b), in this Embodiment 7, the molten alloy q is abruptly and intermittently forced out from the nozzle port 43S. As a result, the molten alloy is intermittently divided into spherical powders.

When two pistons 44 are used, the phases of the above vibration pressures are adjusted by synchronizing driving frequencies with each other so that an appropriate pressure is generated in the nozzle 43.

Strictly speaking, the driving frequency of each piston 44 which depends on the amount of the molten alloy to be delivered, the diameter of the delivery passage 43T and the size of the liquid pool portion 43R is preferably 50 kHz to 5 MHz, more preferably 100 kHz to 1 MHz.

Further, in this Embodiment 7, a jet stream of Ar gas is applied to the delivered molten alloy from the nozzle port 16S of the jet nozzle 16 of the cooling gas feeder 15 in synchronism with the injection of the above Ar gas to collide the above delivered molten alloy with the above Ar gas so as to scatter the above molten alloy by this collision energy and solidify it by quenching. Thereby, almost spherical Nd₂Fe₁₄B alloy fine powders having a diameter of 30 µm or less and uniform in diameter can be obtained.

Also in this Embodiment 7, like the example shown in Fig. 2 of the above Embodiment 1, the position of the nozzle port 16S of the above jet nozzle 16 is set such that the direction of the jet stream p of the above Ar gas becomes perpendicular (horizontal) to the delivery direction of the molten alloy q which is forced out intermittently and away from the center of the delivery passage of the above molten alloy to forcedly provide torque to the above molten alloy so as to increase the scattering speed of the above molten alloy and further reduce the diameters of the above alloy fine powders.

When the above Ar gas is blown against the above delivered molten alloy q from two different directions p and p' like the example shown in Fig. 3 of the above Embodiment 1, much finer powders, for example, super fine powders having a diameter of 2 to 10 µm can be obtained.

In the above Embodiment 7, the process for producing Nd₂Fe₁₄B alloy fine powders has been described. The present invention is not limited to the above fine powders and other rare earth alloy fine powders such as SmCo and (NdDy)FeB may be produced by the same process as described above.

An SmFeN magnetic alloy can also be obtained by manufacturing SmFe alloy fine powders by the above production process and nitriding the fine powders.

In the above example, the above cooling gas is an Ar gas. However, the present invention is not limited to this and one of Ar gas, Ne gas and He gas or a mixture thereof may be used.

In the above example, the quartz transducer 46 is driven to vibrate the piston 44. A magneto-distortion transducer or piezoelectric element may be used to drive the piston 44. When a magneto-distortion transducer is used, its generated pressure is higher than that of the above quartz transducer 46 and the amount of the delivered molten alloy can be increased. However, the drive means itself becomes large in size. Therefore, the transducer must be suitably selected according to the size of the production apparatus.

The number of the pistons 44 may be 2, 3 or 5 or more. To suppress nonuniform pressure to be applied to the molten alloy, the above pistons are preferably arranged symmetrical to one another.

As shown in Fig. 18, a horn 48 having the same function as the above valve 42V may be installed in the crucible 42 and vibrated with the magneto-distortion transducer 49 or the like to apply vibration pressure to the molten alloy in the nozzle 43 from above, thereby making it possible to obtain the same effect.

The liquid pool portion 43R is not limited to a spherical shape and may be a rotating oval form or semi-spherical form projecting downward.

### [Example]

The results obtained when the pistons are driven by the quartz transducers to apply vibration pressures having various frequencies to the molten alloy to expel the above molten alloy are shown in Table 2 below. The results obtained when conventional vibration is not applied are also shown as Comparative Example.

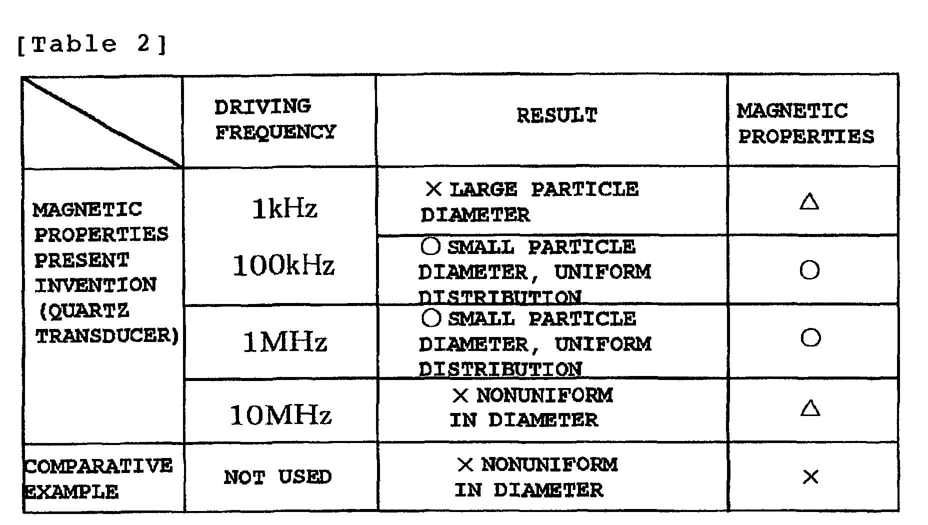

As shown in Table 2, when the driving frequency of the quartz transducer was 100 kHz to 1 MHz, a rare earth magnetic alloy having a small particle diameter and uniform in diameter could be obtained. When the frequency of vibration to be applied was low, the delivered molten alloy was not divided fully with the result that the obtained rare earth magnetic alloy powders had a large particle diameter and poor magnetic properties. When the frequency was too high, the molten alloy was continuously and easily delivered. After the molten alloy was divided by surface tension, the obtained alloy powders had a large particle diameter and was nonuniform in diameter.

Even when the pistons were driven by magneto-distortion transducers, as shown in Table 3 below, the same effect as when they were driven by the above quartz transducers was obtained.

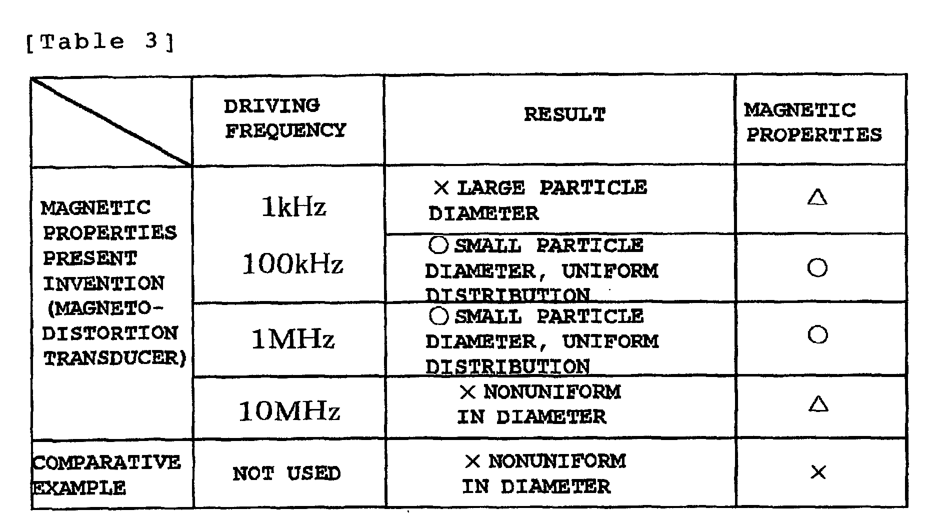

### Embodiment 8

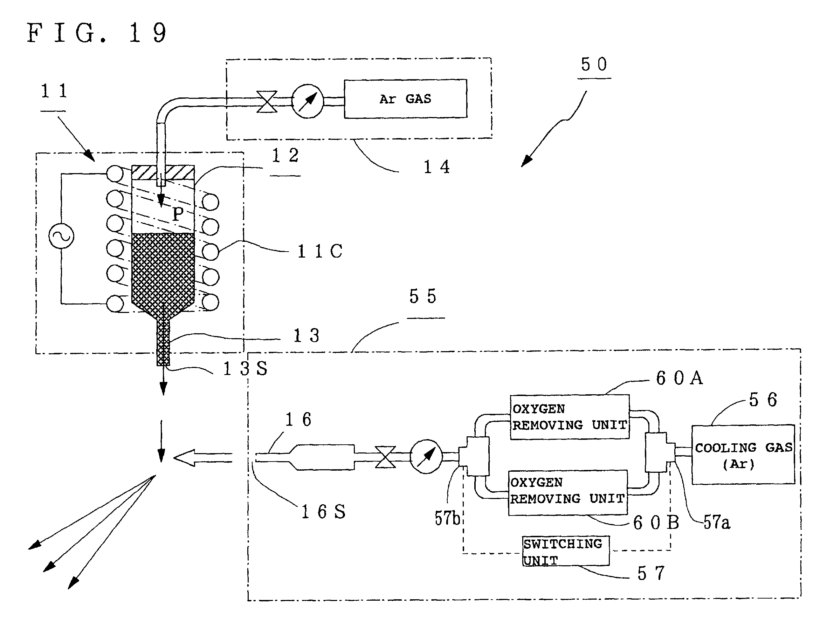

Fig. 19 is a schematic diagram of an apparatus 50 for producing rare earth magnetic alloy powders according to Embodiment 8. In Fig. 19, reference numeral 11 denotes a high-frequency induction furnace having induction coils 11C, 12 a crucible, having a nozzle 13, for melting a rare earth magnetic alloy, 14 a jet gas feeder for supplying an Ar gas which is an inert gas into the above crucible 12 and injecting a high-pressure Ar gas from above the molten rare earth magnetic alloy, and 55 a cooling gas feeder, having a jet nozzle 16, two oxygen removing units 60A and 60B, an Ar gas feeder 56 and a switching unit 57 for controlling two-way valves 57a and 57b to switch the passage of the Ar gas, for blowing the Ar gas passing through one of the above oxygen removing units 60A and 60B against the molten alloy delivered from the above nozzle 13.

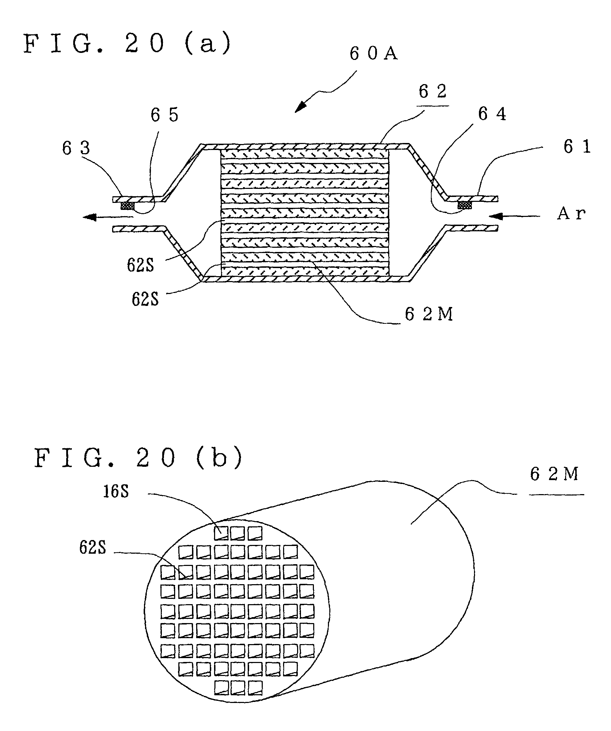

Fig. 20(a) is a diagram showing the constitution of the oxygen removing unit 60A. Reference numeral 61 denotes a gas introduction pipe communicating with the Ar gas feeder 56, 62 a chamber made from Cr which is an active metal and contains a honeycomb-structured oxygen absorber 62M having a large number of through holes 62S parallel to the flow passage of the Ar gas as shown in Fig. 20(b), and 63 a gas feed pipe interposed between this chamber 62 and the jet nozzle 16.

An oxygen gas metering unit 64 for measuring the oxygen content of the Ar gas supplied from the Ar gas feeder 56 and an oxygen gas metering unit 65 for measuring the oxygen content of the Ar gas passing through the above oxygen absorber 62M are mounted on the inlet and outlet sides of the above chamber 62, that is, the above chamber 62 sides of the above gas introduction pipe 61 and the gas feed pipe 63. Thereby, the contents of oxygen before and after the oxygen absorber 62M are detected to judge the oxygen removing capability of the above oxygen absorber 62M.

The Ar gas introduced into the chamber 62 from the Ar gas feeder 56 through the gas introduction pipe 61 contacts Cr which is an active metal while it passes through the oxygen absorber 62M having a large number of through holes 62S. Since the residual oxygen contained in the above Ar gas reacts with Cr to be taken in the above oxygen absorber 62M at this point, a high-purity Ar gas having an extremely low content of the residual oxygen can be forced out from the nozzle port 16S of the jet nozzle 16. The oxygen removing unit 60B arranged in parallel to the above oxygen removing unit 60A has the same constitution.

A description is subsequently given of the process for producing rare earth magnetic alloy powders.

In this Embodiment 8, the process for producing Nd₂Fe₁₄B magnetic alloy powders having a great BH_{Max} (energy product) out of rare earth magnetic alloys will be described.

A mixture of ferroboron (FeB) and solid Fe and Nd as raw materials is placed in the crucible 2 which is then mounted on the inner side of the induction coils 11C of the high-frequency induction furnace 11, and a high-frequency current is applied to the above induction coils 11C to induction heat the above mixture in an Ar gas atmosphere to melt metal elements contained in the above mixture, thereby producing a molten Nd₂Fe₁₄B alloy.

Thereafter, in the above molten state, the jet gas feeder 14 is activated to inject an Ar gas at a predetermined pressure from above the above molten Nd₂Fe₁₄B alloy (to be referred to as "molten alloy" hereinafter) to expel the above molten alloy in a downward direction from the nozzle port 13S of the nozzle 13 of the above crucible 12.

In this Embodiment 8, a jet stream of high-purity Ar gas passing through the oxygen removing unit 60A is applied to the above delivered molten alloy from the nozzle port 16S of the jet nozzle 16 of the cooling gas feeder 55 in synchronism with the injection of the above Ar gas to collide the above delivered molten alloy with the above Ar gas so as to scatter the above molten alloy by this collision energy and solidify it by quenching. Thereby, almost spherical Nd₂Fe₁₄B alloy fine powders having a diameter of 30 µm or less and rarely oxidized on the surface can be obtained thereby.

In this Embodiment 8, the oxygen gas metering units 64 and 65 for measuring the oxygen content of an Ar gas which is a cooling gas are mounted on the inlet side and the outlet side of the chamber 62 to detect the content of oxygen before and after the oxygen absorber 62M so as to check the reduction capability of the active metal constituting the oxygen absorber 62M. Therefore, when the content of an oxygen gas at the outlet of the chamber 62 exceeds a predetermined reference value, it is judged that the reduction capability of the active metal of the oxygen removing unit 60A lowers. Then, the switching unit 57 is activated to control the two-way valves 57a and 57b to switch the passage of the Ar gas to the oxygen removing unit 60B, thereby making it possible to blow the Ar gas passing through the active metal having a predetermined level of reduction capability against the molten alloy at all times.

In the above oxygen removing unit 60A having lowered reduction capability, the oxygen absorber 62M in the chamber 62 is reduced with a reducing gas such as a hydrogen atom at a predetermined temperature during the operation of the above oxygen removing unit 60B to regenerate active Cr on the surface to make it in a re-usable state.

As for the time for switching the above oxygen removing units 60A and 60B, the oxygen removing units 60A and 60B are switched by comparing the content of an oxygen gas on the outlet side of the above-described chamber 62 with a reference value, or when the difference between the contents of oxygen detected by the oxygen gas metering units 64 and 65 falls below a predetermined value. Alternatively, they may be switched when the total operation time of the oxygen removing unit 60A or 60B reaches a predetermined time.

In the above Embodiment 8, the process for producing Nd₂Fe₁₄B alloy fine powders has been described. The present invention is not limited to the above fine powders and other rare earth alloy fine powders such as SmCo and (NdDy)FeB may be produced by the same process.

An SmFeN magnetic alloy can be obtained by manufacturing SmFe alloy fine powders by the above production process and nitriding the fine powders.

In the above example, the above cooling gas is an Ar gas. The present invention is not limited to this and when one of Ar gas, Ne gas and He gas, or a mixture thereof is used, a high-purity cooling gas having an extremely low content of the residual oxygen can be supplied by passing the above gas through the above oxygen absorber 62M, thereby making it possible to prevent the oxidation of the rare earth magnetic alloy powders without fail.

In the above example, the oxygen absorber 62M having lowered reduction capability is reduced with a hydrogen gas to be regenerated. The oxygen absorber 62M may be reacted with powdery hydrocarbon at a predetermined temperature to be reduced.

The above active metal for removing the residual oxygen contained in the inert gas may be a metal such as Al or Mg. However, an active metal which has higher standard formation free energy of an oxidation reaction than that of hydrogen or carbon, that is, is easily oxidized and regenerated by reduction is desirably used. Specifically, any one of K, Mn, Fe, Co, Ni, Cu, Zn, Sn, W and Pb, or a mixture thereof is preferably used besides the above Cr. Thereby, the oxygen absorber 62M can be reduced and recycled.

The structure or form of the above oxygen absorber 62M is not limited to the above honeycomb structure if it increases the contact area with an inert gas and reduces resistance to a gas stream. A mesh of the above active metal may also be used. Alternatively, the same effect can be obtained by passing an inert gas through a sintered body or porous body of the above active metal.

In the above example, the method of increasing the purity of the inert gas used to produce rare earth magnetic alloy fine powders has been described. The method of increasing the purity of the inert gas of the present invention is applied not only to a process for producing rare earth magnetic alloy powders but also to a process for producing a semiconductor or liquid crystal and a production process which requires the prevention of oxidation of a material such as a battery production process or precision electronic part production process.

### Industrial Feasibility

As described above, according to the present invention, the cooling gas is blown against a position away from the center of the delivery of the above molten alloy to forcedly provide torque to the above molten alloy so as to increase the scattering speed of the above molten alloy when fine powders of the above alloy are to be produced by expelling a rare earth magnetic alloy molten in a crucible from a nozzle port and blowing a cooling gas against the above expelled molten alloy. Therefore, the surface oxidation of the magnetic powders can be prevented and rare earth magnetic alloy fine powders which have a small diameter and are uniform in diameter can be obtained.

Further, since the cooling gas is blown from two or more different directions, almost spherical magnetic fine powders can be obtained. Further, the cooling speed of the scattered molten alloy is reduced by heating the cooling gas or installing a heater around the delivery passage of the molten alloy, thereby making it possible to obtain finer magnetic powders.

Since an inert gas such as He gas, Ar gas or Ne gas is used as the above cooling gas and Zn vapor is supplied to the delivered molten alloy, the effect of preventing the oxidation of the surfaces of the fine powders can be further improved.

A rare earth bond magnet or rare earth sintered magnet having excellent magnetic properties can be obtained by using rare earth magnetic alloy fine powders which are obtained by the above production process, rarely experience surface oxidation, are almost spherical in shape and uniform in diameter.

## Claims

1. A process for producing rare earth magnetic alloy powders, comprising the steps of:
injecting an inert gas from above a rare earth magnetic alloy molten in a crucible to expel the molten alloy from a nozzle port formed in the bottom of the crucible; and
blowing a cooling gas against the expelled molten alloy to produce fine powders of the alloy.

2. The process for producing rare earth magnetic alloy powders according to claim 1, wherein the cooling gas is any one of Ar gas, Ne gas and He gas or a mixture thereof.

3. The process for producing rare earth magnetic alloy powders according to claim 1 or 2, wherein the cooling gas is blown against a position away from the center of the expelling direction of the molten alloy.

4. The process for producing rare earth magnetic alloy powders according to any one of claims 1 to 3, wherein the cooling gas is blown from two or more different directions.

5. The process for producing rare earth magnetic alloy powders according to any one of claims 1 to 4, wherein the cooling gas is blown against two or more positions in the falling direction of the molten alloy.

6. The process for producing rare earth magnetic alloy powders according to claim 4 or 5, wherein the blowing directions of the cooling gas are perpendicular to each other when seen from the nozzle port side of the crucible.

7. The process for producing rare earth magnetic alloy powders according to any one of claim 4 to 6, wherein the angle formed by the blowing direction of the cooling gas and the expelling direction of the molten alloy is 20 to 45°.

8. The process for producing rare earth magnetic alloy powders according to any one of claims 1 to 7, wherein the cooling gas is mixed with Zn vapor.

9. The process for producing rare earth magnetic alloy powders according to any one of claims 1 to 7, wherein Zn vapor is supplied to the delivery passage of the molten alloy.

10. The process for producing rare earth magnetic alloy powders according to any one of claims 1 to 9, wherein the cooling gas is heated and blown.

11. The process for producing rare earth magnetic alloy powders according to any one of claims 1 to 10, wherein a heater is mounted around the delivery passage of the molten alloy.

12. The process for producing rare earth magnetic alloy powders according to any one of claims 1 to 11, wherein the shape of the nozzle for jetting out the cooling gas is conical.

13. The process for producing rare earth magnetic alloy powders according to claim 12, wherein the apex angle of the conical nozzle is 20 to 40°, and the length of the nozzle is set such that the ratio of the opening diameter D of the outlet to the opening diameter d of the inlet satisfy the relationship 20 < (D/d) < 60.

14. The process for producing rare earth magnetic alloy powders according to any one of claims 1 to 13, wherein the nozzle for jetting out the cooling gas is connected to an ultrasonic transducer in order to apply ultrasonic waves to the expelled molten alloy.

15. The process for producing rare earth magnetic alloy powders according to claim 14, wherein the barrel of vibration of the ultrasonic waves is situated in the delivery passage of the molten alloy.

16. The process for producing rare earth magnetic alloy powders according to any one of claims 1 to 15, wherein a liquid pool portion is formed in the nozzle for jetting out the cooling gas, and the molten alloy in the liquid pool portion is expelled while vibration is applied thereto.

17. The process for producing rare earth magnetic alloy powders according to any one of claims 1 to 16, wherein an induction magnetic field is applied to the molten alloy to be expelled from the nozzle.

18. A process for producing rare earth magnetic alloy powders, comprising the steps of:
injecting an inert gas from above a rare earth magnetic alloy molten in a crucible to expel the molten alloy from a nozzle formed in the bottom of the crucible; and
colliding the expelled molten alloy with the wing portions of a rotating cooling drum having a plurality of wing portions extending in an axial direction on the flank to produce fine powders of the alloy.

19. The process for producing rare earth magnetic alloy powders according to claim 18, wherein the falling speed of the molten alloy and the pitch, projection height and moving speed of the wing portions are set such that the falling distance of the molten alloy expelled while the wing portions move one pitch becomes shorter than the projection height of the wing portions.

20. The process for producing rare earth magnetic alloy powders according to any one of claims 1 to 19, wherein the rare earth magnetic alloy is R-Fe alloy (R is at least one rare earth metal).

21. The process for producing rare earth magnetic alloy powders according to any one of claims 1 to 19, wherein the rare earth magnetic alloy is R-Fe-B alloy.

22. The process for producing rare earth magnetic alloy powders according to claim 21, wherein the rare earth magnetic alloy is NdFeB alloy.

23. The process for producing rare earth magnetic alloy powders according to any one of claims 20 to 22, wherein the rare earth magnetic alloy is an iron-rich rare earth magnetic alloy.

24. The process for producing rare earth magnetic alloy powders according to any one of claims 20 to 22, wherein the rare earth magnetic alloy is an iron-poor rare earth magnetic alloy.

25. The process for producing rare earth magnetic alloy powders according to claim 24, wherein a cooling gas containing iron powders is blown against the expelled molten alloy to produce fine powders of the alloy.

26. The process for producing rare earth magnetic alloy powders according to claim 25, wherein the iron powders are needle-like iron powders obtained by reducing goethite.

27. The process for producing rare earth magnetic alloy powders according to claim 1 or any one of claims 3 to 17, wherein SmFe alloy is molten in place of the rare earth magnetic alloy, and an N₂ gas is blown against the expelled molten alloy to nitride and finely powder the alloy in order to produce SmFeN magnetic alloy powders.

28. The process for producing rare earth magnetic alloy powders according to claim 27, wherein the SmFeN magnetic alloy powders are produced in an N₂ gas atmosphere.

29. An apparatus for producing rare earth magnetic alloy powders, comprising:
a crucible having a nozzle in the bottom;
a jet gas feeder for injecting a high-pressure inert gas from above a rare earth magnetic alloy molten in the crucible; and
a cooling drum positioned below the molten alloy expelled from the nozzle, wherein
the cooling drum is turned, and a plurality of wing portions extending in an axial direction are provided on the flank of the cooling drum to quench and solidify the molten alloy by colliding it against the flank of the cooling drum.

30. The apparatus for producing rare earth magnetic alloy powders according to claim 29, wherein wavy irregularities extending in an axial direction are formed on at least the faces on a side corresponding to the drum rotating direction of the wing portions.

31. The apparatus for producing rare earth magnetic alloy powders according to claim 29 or 30 which further comprises means of applying a jet stream of cooling water to the contact portion with the molten alloy of the drum.

32. The apparatus for producing rare earth magnetic alloy powders according to any one of claims 29 to 31, wherein a collision board is placed in the scattering direction of the molten alloy collided with the drum.

33. An apparatus for producing rare earth magnetic alloy powders, comprising:
a crucible having a nozzle in the bottom;
a jet gas feeder for injecting a high-pressure inert gas from above a rare earth magnetic alloy molten in the crucible; and
a cooling gas feeder, having a jet nozzle, for blowing a cooling gas against the expelled molten alloy, wherein
the nozzle is provided with actuators having an end movable in contact with the molten alloy in the nozzle.

34. The apparatus for producing rare earth magnetic alloy powders according to claim 33, wherein a liquid pool portion is formed in the nozzle, and the ends of the actuators are movable in contact with the molten alloy in the liquid pool portion.

35. The apparatus for producing rare earth magnetic alloy powders according to claim 33 or 34, wherein the liquid pool portion is substantially spherical.

36. The apparatus for producing rare earth magnetic alloy powders according to any one of claims 33 to 35, wherein the actuators are driven by a magneto-distortion transducer or a quartz transducer having a piezoelectric effect.

37. The apparatus for producing rare earth magnetic alloy powders according to claim 36, wherein the drive frequency of the actuators is 50 kHz to 5 MHz.

38. A process for producing a rare earth bond magnet, comprising the steps of:
dispersing rare earth magnetic alloy fine powders manufactured by the process for producing rare earth magnetic alloy fine powders according to any one of claims 1 to 28 in a binder to prepare a resin magnet composition; and
molding this resin magnet composition using a metal mold.

39. The process for producing a rare earth bond magnet according to claim 38, wherein the rare earth magnetic alloy fine powders are heated at a predetermined temperature.

40. The process for producing a rare earth bond magnet according to claim 38 or 39, wherein the resin magnet composition is molded while it is aligned in a magnetic field.

41. The process for producing a rare earth bond magnet according to any one of claims 38 to 40, wherein the resin magnet composition is manufactured from almost spherical rare earth magnetic alloy fine powders as the fine powders.

42. The process for producing a rare earth bond magnet according to claim 41, wherein the diameters of the rare earth magnetic alloy fine powders are in the range of 2 to 100 µm.

43. The process for producing a rare earth bond magnet according to claim 42, wherein the diameters of the rare earth magnetic alloy fine powders are in the range of 2 to 30 µm.

44. A process for producing a rare earth sintered magnet, comprising the step of:
sintering rare earth magnetic alloy fine powders manufactured by the process for producing rare earth magnetic alloy fine powders according to any one of claims 1 to 28 at a predetermined temperature.

45. The process for producing a rare earth sintered magnet according to claim 44, wherein the rare earth magnetic alloy fine powders are pressed and aligned in a magnetic field and then sintered.

46. The process for producing a rare earth sintered magnet according to claim 44 or 45, wherein almost spherical rare earth magnetic alloy fine powders are used as the fine powders.

47. The process for producing a rare earth sintered magnet according to claim 46, wherein the diameters of the rare earth magnetic alloy fine powders are in the range of 2 to 30 µm.

48. A process for increasing the purity of an inert gas, comprising the step of passing the inert gas through an active metal to remove the residual oxygen contained in the inert gas.

49. The process for increasing the purity of an inert gas according to claim 48, wherein the active metal has greater standard formation free energy for an oxidation reaction than hydrogen.

50. The process for increasing the purity of an inert gas according to claim 48, wherein the active metal has greater standard formation free energy for an oxidation reaction than carbon.

51. The process for increasing the purity of an inert gas according to any one of claims 48 to 50, wherein the active metal is any one of K, Cr, Mn, Fe, Co, Ni, Cu, Zn, Sn, W and Pb, or a mixture thereof.

52. The process for increasing the purity of an inert gas according to any one of claims 48 to 51, wherein the active metal is shaped like a mesh.

53. The process for increasing the purity of an inert gas according to any one of claims 48 to 51, wherein the active metal is shaped like a honeycomb.

54. The process for increasing the purity of an inert gas according to any one of claims 48 to 51, wherein the inert gas is let pass through a sintered body or porous body of the active metal.

55. A process for producing rare earth magnetic alloy powders using an inert gas which is purified by the process of any one of claims 48 to 54 as the cooling gas of claim 1.

56. An apparatus for producing rare earth magnetic alloy powders, comprising:
a crucible having a nozzle in the bottom;
a jet gas feeder for injecting a high-pressure inert gas from above a rare earth magnetic alloy molten in the crucible; and
a cooling gas feeder, having a jet nozzle, for blowing a cooling gas against the expelled molten alloy, wherein
the cooling gas is let pass through a chamber containing an active metal.

57. The apparatus for producing rare earth magnetic alloy powders according to claim 55, wherein at least two chambers through which the cooling gas passes are arranged parallel to each other and can be switched therebetween.

58. The apparatus for producing rare earth magnetic alloy powders according to claim 56, wherein oxygen content detection means for detecting the content of the residual oxygen in the inert gas is mounted on a downstream side of the active metal in the chamber.
